(19) **Europäisches Patentamt / European Patent Office / Office européen des brevets**

(11) **EP 3 207 646 B1**

(12) **EUROPEAN PATENT SPECIFICATION**

(45) Date of publication and mention
of the grant of the patent:
**14.07.2021 Bulletin 2021/28**

(21) Application number: **15851446.3**

(22) Date of filing: **22.09.2015**

(51) Int Cl.:
*H04J 1/00* (2006.01)        *H04B 7/0452* (2017.01)
*H04L 5/00* (2006.01)        *H04W 88/08* (2009.01)
*H04B 7/022* (2017.01)

(86) International application number:
**PCT/US2015/051408**

(87) International publication number:
**WO 2016/060791 (21.04.2016 Gazette 2016/16)**

(54) **SIMULTANEOUS COMMUNICATION WITH MULTIPLE WIRELESS COMMUNICATION DEVICES**

SIMULTANE KOMMUNIKATION MIT MEHREREN
DRAHTLOSKOMMUNIKATIONSVORRICHTUNGEN

COMMUNICATION SIMULTANÉE AVEC DE MULTIPLES DISPOSITIFS DE COMMUNICATION
SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.10.2014   US 201462065357 P
12.06.2015   US 201562174707 P**

(43) Date of publication of application:
**23.08.2017 Bulletin 2017/34**

(73) Proprietor: **Cisco Technology, Inc.
San Jose, CA 95134-1706 (US)**

(72) Inventor: **LYONS, Daniel Joseph
Medina
Ohio 44256 (US)**

(74) Representative: **Noble, Nicholas et al
Kilburn & Strode LLP
Lacon London
84 Theobalds Road
London WC1X 8NL (GB)**

(56) References cited:
**WO-A1-2011/025661      WO-A1-2014/055294
WO-A2-2009/098541      US-A1- 2005 047 384
US-A1- 2006 072 524      US-A1- 2007 263 736
US-A1- 2013 136 159**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

**Field**

Embodiments of the present invention generally relate to methods and systems for simultaneous communication with multiple wireless communication devices.

**Description of the Related Art**

Wireless local area networks (WLAN)s provide means of transferring data between access points (AP)s and client devices using wireless signaling as defined in the IEEE 802.11 standards. The initial WLAN standards (802.11 a/b/g) were built upon the assumption that only one AP or client device could transmit on a specific channel at a time and the transmitting device would transmit only one set of information at once. Later, the 802.11n standard introduced methods for transmitting multiple information sets simultaneously using a technique known as multiple input multiple output (MIMO), but still with the assumption that only one device could transmit at a time and the information sets would be destined to only one client device or a group of client devices all receiving the same information. Later, the 802.11ac standard introduced methods of permitting an AP to transmit multiple sets of information simultaneously with each information set destined for different client devices using a technique referred to as downlink (DL) multi-user MIMO (MU-MIMO), but still with the limitation that only one device could transmit at once. The advancements in 802.11 technologies have led to peak over the air data rates of up to 6.9333 gigabits per second (Gbps) while utilizing 160 MHz of bandwidth in the 802.11ac standard.

For all these advances in 802.11 technologies, however, WLAN APs are frequently limited in practice to providing under 30 megabits per second (Mbps) of total throughput in many real world scenarios with a high density of client devices. There are many reasons for this practical limitation in throughput in high density scenarios. Firstly, 802.11 uses a distributed scheduling mechanism in which the AP and client devices individually attempt to determine appropriate times to access the wireless medium. If multiple AP or client devices transmit simultaneously, the information is generally lost because the signals interfere. WLAN devices compensate for this by accessing the medium less frequently in an attempt to reduce the probability of additional data loss. This results in an inefficient and frequently unreliable method of sharing the medium in high density environments. Secondly, the MU-MIMO techniques available for WLAN devices are limited in usefulness for solving the primary problems in high density environments. 802.11 supports no uplink (UL) MU-MIMO mechanism which would allow the AP to receive from multiple client devices simultaneously. Although UL MU-MIMO is available in other technologies such as LTE (3GPP TS 36), a similar implementation would require fundamental changes to the 802.11 standard and devices. DL MU-MIMO which is supported by 802.11ac requires frequent updates on the channel between the AP and client devices in order to create a DL MU-MIMO transmission. The gathering of channel information to support DL MU-MIMO happens frequently due to the rapidly changing channel. Without any UL MU-MIMO technique to allow the AP to quickly gather this information, the AP must gather this information from each device individually resulting in decreasing efficiency as more devices are added to the DL MU-MIMO transmission and resulting in a practical limit to the effectiveness of DL MU-MIMO. For these reasons and more, the throughput and reliability of WLAN is generally problematic in high density scenarios. In summary, most of the problems and limitations of WLAN in environments with a high density of client devices stems from the inability to receive multiple WLAN signals simultaneously.

The prevalent implementations of 802.11 utilize orthogonal frequency division multiplexing (OFDM) in which many symbols are transmitted simultaneously with each simultaneously transmitted symbol utilizing a different frequency. The individual frequencies used to transmit the different symbols are referred to as subcarriers. OFDM generally relies on the average signal to interference plus noise ratio (SINR) at the individual subcarriers to be sufficient to permit proper channel estimation and subsequent demodulation. In the case where multiple 802.11 transmissions occur simultaneously and with no prior knowledge of the channel to resolve the transmissions, information from multiple sources contributes to the subcarrier. Given that 802.11 has no inherent mechanism for resolving the information on a subcarrier when the information arises from multiple sources, the information from all sources is generally lost.

One method for overcoming this limitation is for a receiving device with multiple antennas to know what devices will be transmitting, know the change the channel will induce on each subcarrier for the various devices at each of the antennas, and determine appropriate subcarrier weighting vectors to apply to the received signals to isolate each of the various signals. Such a mechanism is available within LTE (3GPP TS 36) in which the base station device can explicitly control when devices are permitted to transmit and has mechanisms for getting channel estimates from the client devices of interest. LTE further enforces tight frequency alignment for devices, tight timing control over devices, and has signal properties permitting the base station to readily gather channel estimates from multiple client devices simultaneously.

802.11, conversely, has a shared scheduling mechanism in which devices seemingly transmit at random. Furthermore, 802.11 has none of the strict frequency alignment, strict timing control, or signal design features permitting channel estimates from various sources to be determined simultaneously. Therefore, overcoming the limitations of being able to receive multiple 802.11 signals simultaneously using conventional techniques is not practical for 802.11.

US 2006/072524 A1 discloses a method and an apparatus in a first wireless station of a network transmitting to a second wireless station. The network uses multi-tone OFDM signals. The first station includes multiple antennas and a receive and a transmit signal path per antenna. Each receive signal path includes a discrete Fourier transformer determining the tones in a received signal, and each transmit signal path includes an inverse discrete Fourier transformer converting tones to a signal. The method includes determining channel estimates for each tone and each receive path while receiving from the second station, determining transmit weights to transmit to the second station, tone-by-tone weighting a signal for transmission to the second station to produce weighted tone sets for each transmit signal path, and transmitting the weighted tone sets.; The first station is configured so that the weighting produces additive beamforming without the second station needing multiple antennas.

US 2005/0047384 A1 discloses a method for communication over a wireless local area network (WLAN) includes receiving uplink signals from a plurality of stations in the WLAN. Responsively to the uplink signals, a set of the stations is selected for inclusion in a spatial multiplexing group. Downlink signals are transmitted simultaneously to the stations in the set using spatial division multiplexing (SDM).

OVERVIEW

An invention is set out in the claims.

## SUMMARY

The invention is defined by the independent claims: claim 1 (method), claim 12 (device) and claim 13 (computer program product). Advantageous embodiments are described in the dependent claims. Embodiments and/or examples mentioned in the description that do not fall under the scope of the claims are useful for understanding the invention.

Embodiments of the present invention relate to methods and systems for simultaneous communication with multiple wireless communication devices. In one embodiment, as covered by the present invention, a method for simultaneous communication with multiple wireless communication devices includes receiving, using a plurality of antennas (102, 202) at a first wireless station, a plurality of packets, comprising a plurality of orthogonal frequency division multiplexing, OFDM, symbols, transmitted simultaneously from a plurality of other wireless stations wherein each of the simultaneously transmitted symbols includes a plurality of subcarriers; from each antenna of the plurality of antennas, taking a number of continuous samples from within each OFDM symbol to form a sample set, for each antenna (102, 202) of the plurality of antennas, frequency domain transforming the sample sets from that antenna (102, 202) to produce frequency domain outputs for each subcarrier; for each subcarrier, grouping the frequency domain transform outputs into a subcarrier vector specific to that subcarrier; determining a difference between subcarrier vectors formed over different sample sets, and based on the difference, determining a weighting vector for each subcarrier, wherein the weighting vector is selected so as to isolate each received packet from interference sources, and performing a multiplication of the vector specific to that subcarrier and the selected weighting vector so as to enable the first wireless station to at least one of detect or demodulate the received plurality of packets that were simultaneously transmitted by the plurality of other wireless stations.

Other and further embodiments of the present disclosure are described below.

## BRIEF DESCRIPTION OF THE DRAWINGS

FIG. 1 illustrates an example architecture in which the system comprised of multiple RF nodes and an aggregator communicates with multiple client devices in accordance with some embodiments of the present invention.

FIG. 2 is a block diagram of a RF node in accordance with some embodiments of the present invention.

FIG. 3 is a block diagram of an aggregator in accordance with some embodiments of the present invention.

FIG. 4 depicts the subcarrier vector computation which is used in various algorithms throughout this disclosure and explains the properties of its output in the presence of OFDM signals in accordance with some embodiments of the present invention.

FIG. 5 provides illustration of the method of detecting 802.11 signals in the presence of other interfering signals in accordance with some embodiments of the present invention.

FIG. 6, FIG. 7, FIG. 8, and FIG. 9 provide results showing the output of the packet detection method in accordance with some embodiments of the present invention.

FIG. 10, FIG. 11, FIG. 12, FIG. 13, and FIG. 14 provide illustration of the methods of determining the weighting vector to resolve individual packets prior to demodulation in the presence of other interfering signals in accordance with some embodiments of the present invention.

FIG. 15, FIG. 16, and FIG. 17 provide results illustrating the ability of the disclosure to demodulate multiple 802.11 signals simultaneously in accordance with some embodiments of the present invention.

FIG. 18, FIG. 19, and FIG. 20 provide results illustrating the receiver packet error rate versus signal to interference ratio performance of the disclosure in comparison to existing technology in accordance with some embodiments of the present invention.

FIG. 21 and FIG. 22 illustrate how UL MU-MIMO is enabled in accordance with some embodiments of the present invention.

FIG. 23 and FIG. 24 illustrate how the interference suppression benefits are applicable to transmitting in addition to receiving in accordance with some embodiments of the present invention.

FIG. 25 and FIG. 26 illustrate how DL MU-MIMO is enabled in accordance with some embodiments of the present invention.

FIG. 27 and FIG. 28 illustrate multiple cells are enabled to perform DL MU-MIMO simultaneously while minimizing interference between cells in accordance with some embodiments of the present invention.

FIG. 29 and FIG. 30 illustrate the complications of performing DL MU-MIMO to client devices with multiple antennas in accordance with some embodiments of the present invention.

FIG. 31, FIG. 32, and FIG. 33 illustrate time of arrival estimation of signal multi-path components is enabled in accordance with some embodiments of the present invention.

FIG. 34 and FIG. 35 illustrate how the ability to perform time of arrival estimation overcomes the complications of performing DL MU-MIMO to client devices with multiple antennas in accordance with some embodiments of the present invention.

Figure 36 depicts a computer system that can be utilized in various embodiments of the present invention, according to one or more embodiments of the invention.

To facilitate understanding, identical reference numerals have been used, where possible, to designate identical elements that are common to the figures. The figures are not drawn to scale and may be simplified for clarity. It is contemplated that elements and features of one embodiment may be beneficially incorporated in other embodiments without further recitation.

## DETAILED DESCRIPTION

Embodiments of the present invention generally relate to the field of wireless communications. Specifically, some embodiments of the present invention relate to systems and methods for allowing simultaneous communication with multiple wireless local area network (WLAN) client devices to provide throughput and reliability enhancements in environments with a high density of client devices. Embodiments of the present invention have advantages to overcome the performance limitations of conventional WLAN architectures including the ability to receive multiple uplink (UL) signals from different client devices simultaneously without any a-priori channel information, the ability to effectively transmit information to one or more client devices while simultaneously receiving information from one or more other client devices, and the ability to substantially increase the number of simultaneous UL and downlink (DL) information sets that may simultaneously be transmitted and received in comparison to conventional architectures.

Furthermore, embodiments of the present invention are compatible with existing WLAN devices and protocols used by such devices. Particularly, some embodiments of the present invention relate to PHY layer (i.e., OSI Physical Layer 1) methods for enabling UL multi-user MIMO (MU-MIMO), efficient DL MU-MIMO, simultaneous UL and DL transmissions, interference reduction, and architectures in which one or more remote radio frequency (RF) nodes provide signals to a centralized unit that performs the PHY layer processing.

Some portions of the detailed description which follow are presented in terms of operations on binary digital signals stored within a memory of a specific apparatus or special purpose computing device or platform. In the context of this particular specification, the term specific apparatus or the like includes a general purpose computer once it is programmed to perform particular functions pursuant to instructions from program software. In this context, operations or processing involve physical manipulation of physical quantities. Typically, although not necessarily, such quantities may take the form of electrical or magnetic signals capable of being stored, transferred, combined, compared or otherwise manipulated. It has proven convenient at times, principally for reasons of common usage, to refer to such signals as bits, data, values, elements, symbols, characters, terms, numbers, numerals or the like. It should be understood, however, that all of these or similar terms are to be associated with appropriate physical quantities and are merely convenient labels. Unless specifically stated otherwise, as apparent from the following discussion, it is appreciated that throughout this specification discussions utilizing terms such as "processing," "computing," "calculating," "determining" or the like refer to actions or processes of a specific apparatus, such as a special purpose computer or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device.

In some embodiments, individual 802.11 OFDM transmissions are demodulated when multiple 802.11 OFDM transmissions occur simultaneously. Each of the OFDM tones observed across multiple receive antennas can be envisioned as a subcarrier vector. The cumulative subcarrier vector consists of the sum of individual subcarrier vectors with each individual subcarrier vector associated with an individual source. Although there is no inherent mechanism within 802.11 permitting the individual subcarrier vectors to be directly determined when multiple 802.11 transmissions occur simultaneously, embodiments consistent with the present invention utilize the fact that the individual subcarrier vectors for an 802.11 source will remain constant under specific conditions whereas other subcarrier vectors will generally change. By subtracting different cumulative subcarrier vectors and therefore eliminating the vector component associated with an 802.11 signal of interest having a constant subcarrier vector, embodiments consistent with the present invention are able to build a vector subspace consisting of interfering subcarrier vectors only. By further finding a weighting vector orthogonal to the subspace of interfering subcarrier vectors and applying the weighting vector to the cumulative subcarrier vector, embodiments consistent with the present invention are able to extract and demodulate an individual 802.11 transmission in the presence of the interference sources. The ability to resolve multiple interfering 802.11 signals leads directly to further benefits including the enablement of UL MU-MIMO, efficient DL MU-MIMO, and overall interference reduction providing significantly increased system capacity.

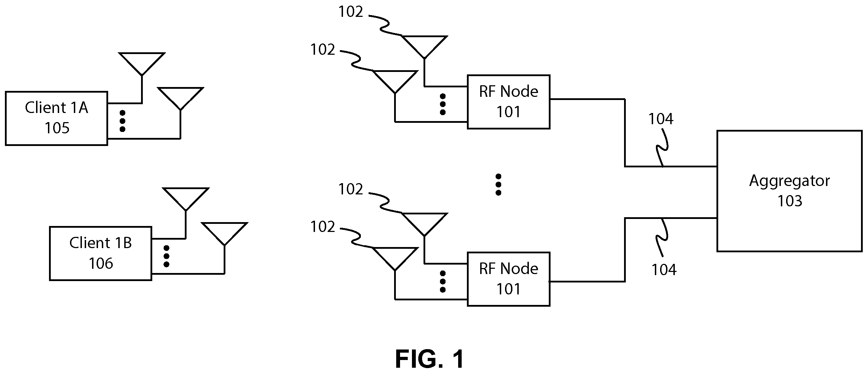

The disclosure described herein is a system and associated methods allowing for simultaneous communication to multiple 802.11 devices. As illustrated in FIG. 1, one such embodiment consists of one or more remote RF nodes **101** with one or more antennas **102** at a first wireless station each used to transmit and receive wireless signals to other wireless stations and/or multiple client devices simultaneously. Each RF node **101** would be connected to an aggregator **103** via a wired connection **104** permitting the aggregator **103** to be able to retrieve signals from and send signals to the attached RF nodes **101.** The embodiment described herein pertains to transferring digital baseband signal information via an Ethernet connection, but the signal could be passed between the RF node **101** and aggregator **103** via various other forms such as, but not limited to, the transfer of analog signals being sent using fiber optic cable. The aggregator **103** would perform much of the signal processing required to transmit signals to and receive signals from the various client devices. The RF node **101** would convert between an RF signal and the signal information format used by the aggregator **103.**

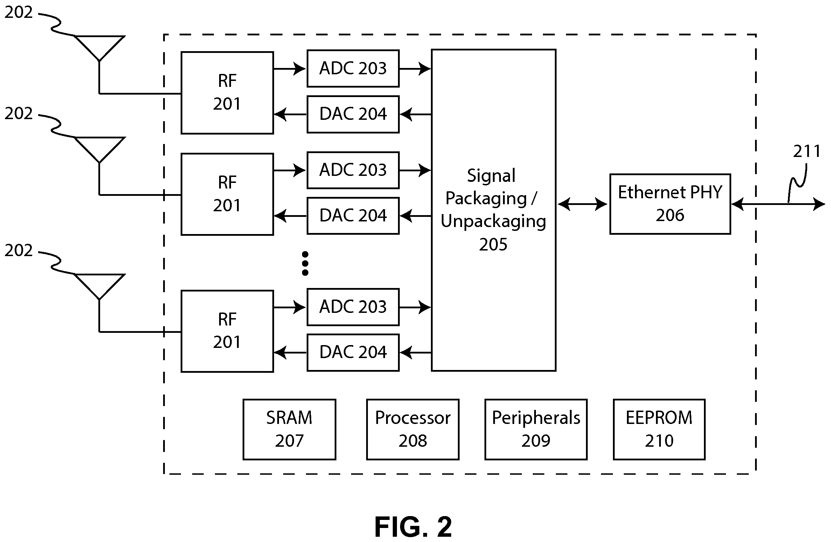

FIG. 2 illustrates a possible embodiment of an RF node. The RF node would connect to one or more antennas **202.** One or more RF sections **201** would convert between the RF signals present at the antenna(s) **202** and baseband signals either captured by an analog to digital converter (ADC) **203** or supplied by a digital to analog converter (DAC) **204.** A data encapsulation unit **205** would perform signal packaging and unpackaging. Specifically, the data encapsulation unit **205** would convert between the ADC **203** and DAC **204** interface to a format capable of low latency transport across a wired medium. For signals received from the antennas **202** by the RF node, the data encapsulation unit **205** would encapsulate the digitized signal information and convey other relevant information such as timestamps and RF gain settings so that the signal could be appropriately reconstructed at the aggregator. For signals received from the aggregator via Ethernet PHY **206,** the data encapsulation unit **205** would extract the data along with relevant information such as timestamps and RF gain settings and apply the information to the RF section(s) **201** and DAC(s) **204** to ensure the desired output signal is output from the RF node to the antenna(s) **202.** The RF node would connect to the wired medium **211** via an Ethernet PHY **206.** The RF node could also include common items such as EEPROM **210,** SRAM **207,** a processor **208,** and various peripherals **209.**

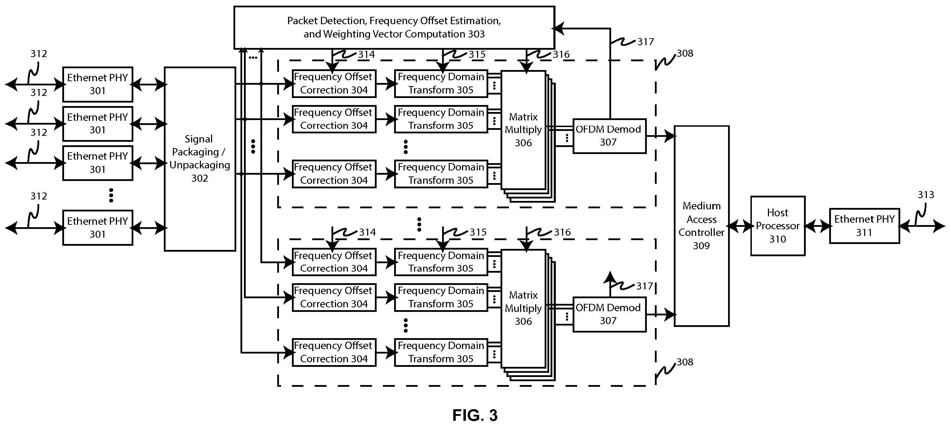

FIG. 3 illustrates an embodiment of the aggregator. To simplify the explanation, the data flow for the aggregator illustrates the processing blocks that would be used to process incoming 802.11 signals rather than showing both the signal reception and generation steps. Those skilled in the art would realize similar inverse operations would be required in practice for transmitting signals. The aggregator would be connected to one or more RF nodes via wired connections **312 (211** in Figure 2) with one or more Ethernet PHYs **301 (206** in Figure 2). A data encapsulation unit **302** would convert between an encapsulated format used by the RF node and a format useable for signal processing. The received signals would be shared between various processing blocks used for packet demodulation **308** as well as packet detection and frequency offset estimation **303.** The packet detection and frequency offset estimation block **303** would generally run continuously looking for the presence of 802.11 packets to decode. When a packet is detected, an individual packet decoding block **308** would start the decoding process. The packet decoding block **308** would be provided with initial information from the packet detection and frequency offset estimation block **303** including packet frequency offset information **314,** the initial packet timing estimate **315,** and initial weighting vector information **316** used to separate the packet of interest from other interfering signals. The frequency offset block **304** would apply a frequency offset correction to compensate for any difference between the client devices center frequency and the center frequency of the RF node and aggregator system. A frequency domain transform **305** would then be performed to transform the input time domain signal into frequency domain information. The frequency domain transform **305** could be a Fast Fourier Transform (FFT) as is common in 802.11 processing, but could also be a modified transform incorporating a windowing function prior to the time to frequency conversion. Such a modified transform has inherent advantages in the presence of interring 802.11 signals with different frequency offsets as would be common in a high density environment. Frequency domain transforms within an individual packet decoding block **308** would produce outputs at subcarriers populated for the incoming 802.11 signal type. For each populated subcarrier for the incoming 802.11 signal, the corresponding frequency domain transform **305** outputs would be grouped into a vector specific to this subcarrier index. The vector for each subcarrier index would then multiply a matrix **306** using a weighting vector selected to isolate the packet of interest from other interference sources. This matrix multiplication **306** would be repeated for populated subcarriers within the 802.11 signal using a potentially unique weighting vector for each subcarrier index. The symbol estimates would then be known for subcarrier indices and could be passed to an OFDM demodulation block **307** which would incorporate standard processing items such as pilot tracking, constellation de-mapper, de-interleaving, forward error correction decoding, and all other items required to demodulate an 802.11 OFDM signal. The symbol state information produced by the OFDM demodulation **307** could optionally be fed back **317** to improve the weighting vector computation used to separate the packets of interest. Additionally, symbol state information of packets currently being generated by the aggregator and channel state information between the individual nodes could be used to improve the weighting vector as well. The output of the OFDM demodulation **307** would be provided to a medium access controller (MAC) **309** which would provide further decoding of the information, provide interaction to higher networking layers, and determine appropriate times to access the channel. Unlike a convention MAC which is capable of processing just one packet at a time, the MAC **309** within the aggregator would be designed to accept multiple packets simultaneously, coordinate the transmission of multiple packets simultaneously, and simultaneously accept incoming packets while scheduling the transmission of outgoing packets. The MAC **309** would connect to a host processor **310** which would perform higher layer operations and interface to the network via an Ethernet PHY **311**. The Ethernet PHY **311** would connect to a wired connection.

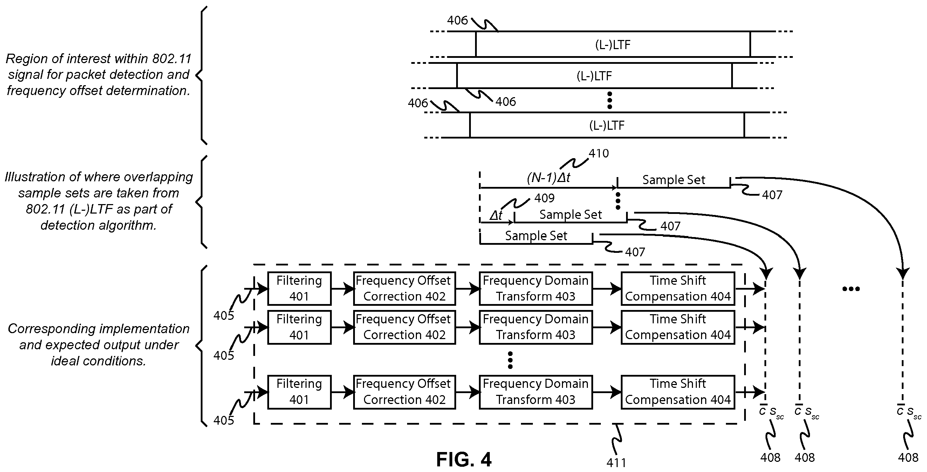

FIG. 4 illustrates the subcarrier vector computation **411** which is a fundamental processing block used in both the packet detection and packet demodulation processes. FIG. 4 additionally illustrates the long training field (LTF in 802.11a/g, L-LTF in 802.11n/ac) within the 802.11 signal that is used for packet timing detection and frequency offset determination and how the proposed method utilizes certain properties of the (L-)LTF for packet detection. The LTF is also referred to as a long symbol. Properties of the signal and algorithm are explained in the context of no interfering signals to simplify the explanation in this illustration. The incoming signals **405** are first filtered **401** to obtain the desired bandwidth that will be used for later processing steps. The output of the filters **401** are passed to a frequency offset correction **402** block which corrects for a specified frequency offset in the incoming signal. The same frequency offset would generally be applied to incoming signals by the various frequency offset correction **402** blocks. The frequency corrected signals are then passed through a frequency domain transform **403**. The frequency domain transform **403** will accept a fixed number of continuous samples to form a sample set **407** spaced at regular intervals of $\Delta t$ **409**. As is true of all OFDM symbols, the signal within the (L-)LTF is cyclical. Assuming the proper frequency offset was applied by the frequency offset correction **402,** the output of the frequency domain transform **403** for all samples sets contained with the (L-)LTF will be the same with the exception that the time shift between samples sets will result in linear phase change across the bandwidth of the signal in the frequency domain. The time shift compensation **404** applies a linear phase change opposite of that induced by the time shift of the signal. Therefore, the resulting output of the time shift compensation **404** will be the same for all sample sets that are contained within the (L-)LTF. The output at each subcarrier is given by

$$c\,s$$

where $c$ is the channel response vector corresponding to the channels between the client device and each of the receive antennas and $s$ is the symbol state transmitted by client device during the (L-)LTF at the particular subcarrier.

Although the properties and results described here would be applicable to all the OFDM symbols within the 802.11 packet, the (L-)LTF is used for detection as it has several features that make it unique for detection purposes. First, only the short training field (STF in 802.11a/g, L-STF in 802.11n/ac) and the (L-)LTF fields are 8 microseconds in duration whereas the remaining OFDM symbols are 4 microseconds or less in duration. The STF is also referred to as a short symbol. The subcarrier vector computation **411** will output a constant vector during the (L-)STF and (L-)LTF for more intervals than the remaining OFDM symbols. Second, the (L-)LTF has approximately 4 times the number of subcarriers populated than the (L-)STF. By excluding any subcarriers used by the (L-)STF, the algorithm is capable of discerning the (L-)LTF from the (L-)STF.

It is fully expected that the various (L-)LTF **406** signals received on the various antennas would be delayed in time relative to each other due to differences in signal propagation time between the client device and various RF nodes. This will manifest itself by the period over which the signal remains constant being different for the various outputs. The packet detection algorithm inherently deals with this phenomenon, however, by assuming that detection of a constant shifted in time is actually two different signals. This detection of two different packets which is actually just one may lead to two different demodulation blocks decoding the same packet using different time shifts. If the information is deemed to be the same through the demodulation process, however, the information resulting from the two different demodulation processes can be combined resulting in improved performance or one of the demodulation processes can be stopped and the weighting vectors for the surviving demodulation process can be recalculated using different time offsets per path to effectively re-align the signals in time prior to demodulation.

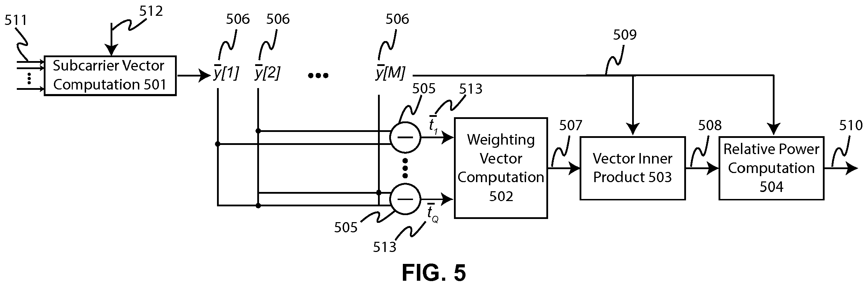

FIG. 5 illustrates the packet detection and frequency offset determination algorithm. The subcarrier vector computation **501** was described previously in FIG. 4 and accepts a specified frequency offset and outputs a vector of subcarrier estimates. The subcarrier vector computation outputs vectors **506** at regular intervals. Unlike the description presented in FIG. 4, the algorithm is now explained in the context of both the signal of interest and other interfering signals being present. Assuming we are at the (L-)LTF section of the packet and have the correct frequency offset, the output vectors **506** will have a constant vector component for the duration of the (L-)LTF corresponding to the desired signal plus additional non-constant vector components corresponding to interfering sources which could be other 802.11 signals as well as non 802.11 signals. For each subcarrier, these vectors may be represented by

$$\bar{y}[m] = \bar{c}\,s + \sum_{i=1}^{I} \bar{c}_{INT,i} x_i[m]$$

where $y[m]$ is the signal vector **506** at a particular time instant, $c$ is the channel response vector for the desired signal, $s$ is the (L-)LTF symbol transmitted by the client at that subcarrier, $I$ is the total number of interferers, $c_{INT,i}$ is the channel response vector for the $i^{th}$ interference source, and $x_i[m]$ is the frequency domain transform of the $i^{th}$ interference source signal at the current subcarrier. The various output vectors **506** will be a linear combination of the desired channel vector ($c$) and all the interfering channel vectors ($c_{INT,1}$, $c_{INT,2}$, ..., $c_{INT,I}$). Subtracting different combinations of these vectors **505** yields an intermediate set of Q vectors ($t_1$, ...,$t_Q$). Because the desired signal $c\,s$ within $y[m]$ is constant, the resultant vectors ($t_1$, ..., $t_Q$) produced by finding the difference in Q combinations of $y[m]$ will have no component of the desired channel response $c$ but will be a linear combination of the interfering vectors. For example, subtracting $y[m_1]$ from $y[m_2]$ provides

$$\bar{y}[m_2] - \bar{y}[m_1] = \sum_{i=1}^{I} \bar{c}_{INT,i}(x_i[m_2] - x_i[m_1])$$

which is a linear combination of the interfering channel vectors only. The weighting vector computation **502** accepts the intermediate set of vectors ($t_1$, ..., $t_Q$) and finds a vector orthogonal to the interfering vector space but not orthogonal to the desired channel response $c$. This vector may be determined by starting with $y[m]$, using Gram-Schmidt orthogonalization to produce an orthonormal basis ($v_1$, ..., $v_Q$) from ($t_1$, ..., $t_Q$), and then subtracting the components of $y[m]$ that lie within the span of ($v_1$, ..., $v_Q$) according to

$$\bar{z} = \bar{y}[m] - \sum_{q=1}^{Q} \bar{v}_q^h \bar{y}[m]$$

where $z$ is the computed vector orthogonal to the interference channel vectors and $h$ denotes conjugate transpose. The weighting vector is formed by normalizing $z$ according to

$$\bar{w} = \frac{\bar{z}}{\sqrt{\bar{z}^h \bar{z}}}.$$

$w$ can be used to determine the energy in $y[m]$ orthogonal to the interfering sources relative to the total energy in $y[m]$ using

$$\frac{\overline{w}^h \overline{y}[m]}{\sqrt{\overline{y}^h[m]\overline{y}[m]}}$$

which is computed in the relative power computation **504.** The above detection steps resulting in the relative power output **510** are repeated at various frequency inputs **512** to detect where the relative power computation produces peaks across the spectrum of possible client device frequency offsets. Additionally, to properly resolve between the (L-)LTF and other packet symbols, the input vectors **506** should be taken across a time span approaching 8 microseconds. Under these conditions and avoiding subcarriers used by the (L-)STF allows the algorithm to properly detect the (L-)LTF.

The disclosed method is able to detect and resolve 802.11 OFDM packets by the end of the (L-)LTF. This is advantageous in that the demodulation of the packet can begin immediately after the (L-)LTF and therefore avoid any latency in decoding the packet. The method relies on some amount of frequency or timing offset between multiple packets to be able to resolve the individual packets. In practice, the disclosed method was found to be capable of resolving packets with as little as 200 Hz of frequency offset separation between packets or as little as 300 nano-seconds of timing separation between packets. Given the 802.11 standards allows for up to +/- 118 kHz of frequency error for a device, the likelihood of having multiple packets within 200 Hz of frequency offset is relatively low. In the event that two packets are so closely aligned in timing and frequency as to be unresolvable by the detection algorithm, the algorithm is still capable of detecting and decoding additional packets that have adequate frequency and/or timing difference from the two unresolvable packets.

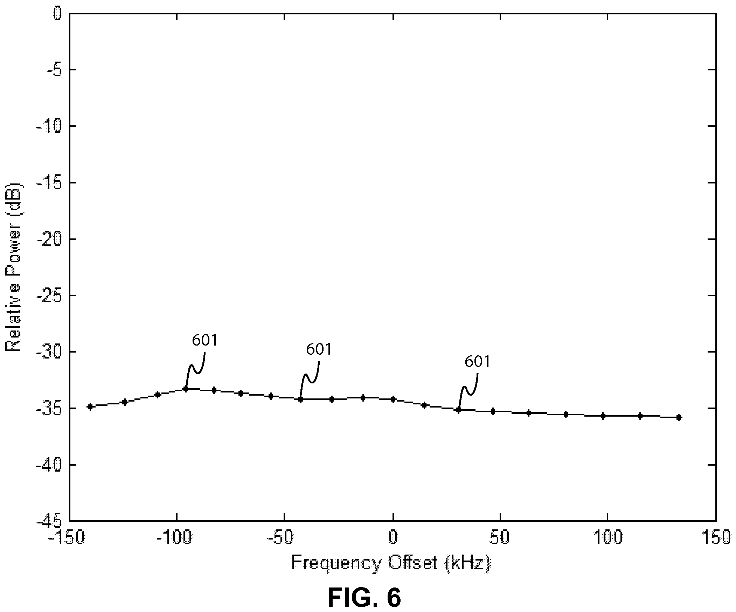

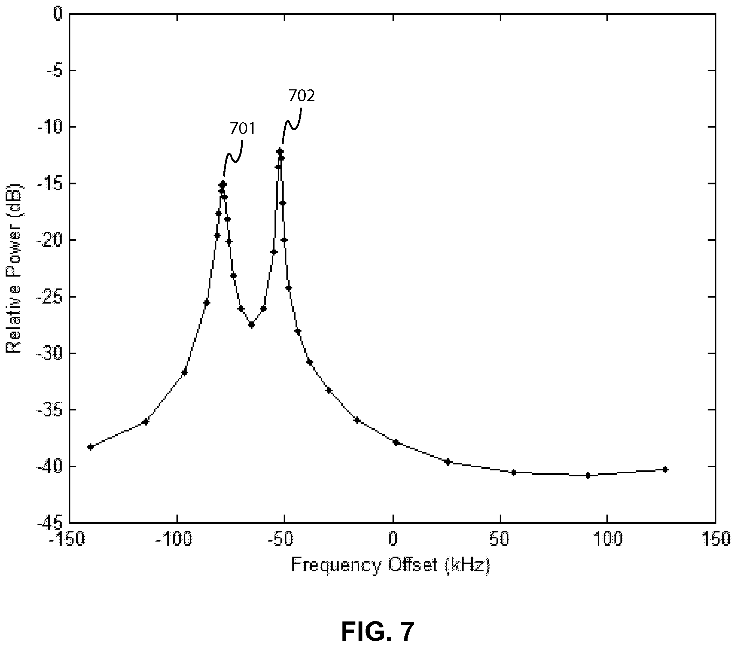

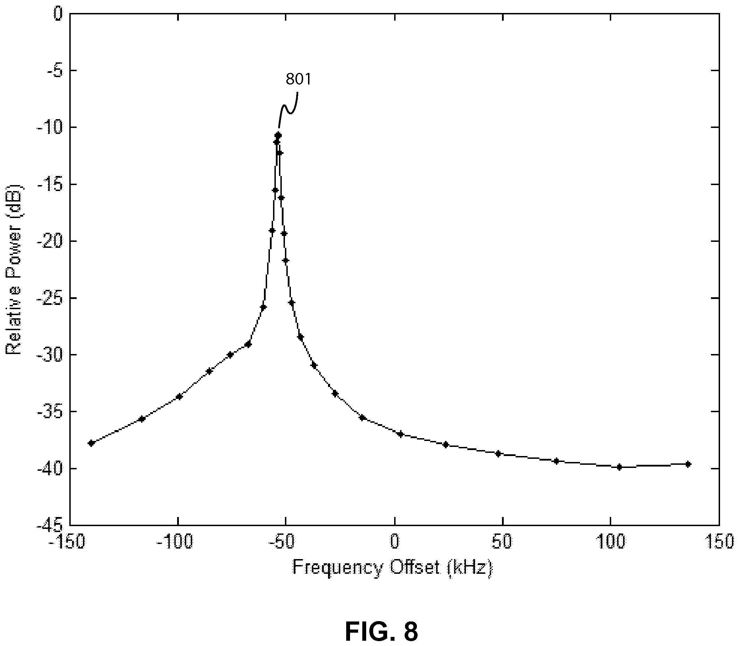

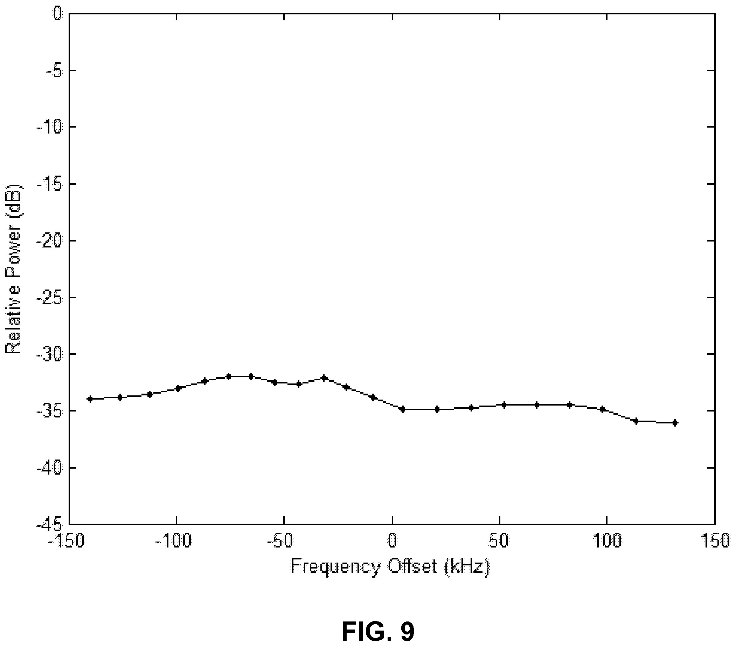

FIG. 6, FIG. 7, FIG. 8, and FIG. 9 show results of using the packet detection algorithm. In all cases presented, there were three 802.11 OFDM packets received within 1 microsecond of each other and each with a unique frequency offset. FIG. 6 illustrates the output of the packet detection algorithm converted to decibels and the algorithm performed at discrete points **601** across the frequency range of interest. In this case, packet timing is roughly 500 nanoseconds prior to the (L-)LTF of the first packet and no noticeable peaks are detected. FIG. 7 illustrates the packet detection algorithm at approximately the timing position where the samples sets used for the detection algorithm are centered in the (L-)LTF for two of the three packets. In this case, we see clear peaks **701** and **702** in the spectrum output indicating there are two potential packets present. FIG. 8 illustrates the packet detection algorithm at approximately the timing position where the samples sets used for the detection algorithm are centered in the (L-)LTF of the third packet. At this point, we see only one peak **801** signifying there is only one packet of interest at this timing offset. The frequency offset between the packet in FIG. 8 **801** and the packet in FIG. 7 at **702** are very small and yet the algorithm is properly able to resolve between the two packets due to a timing offset between the two packets. FIG. 9 illustrates the packet detection algorithm output after the (L-)LTF of all packets has passed in which no peaks can be seen in the spectrum output as expected.

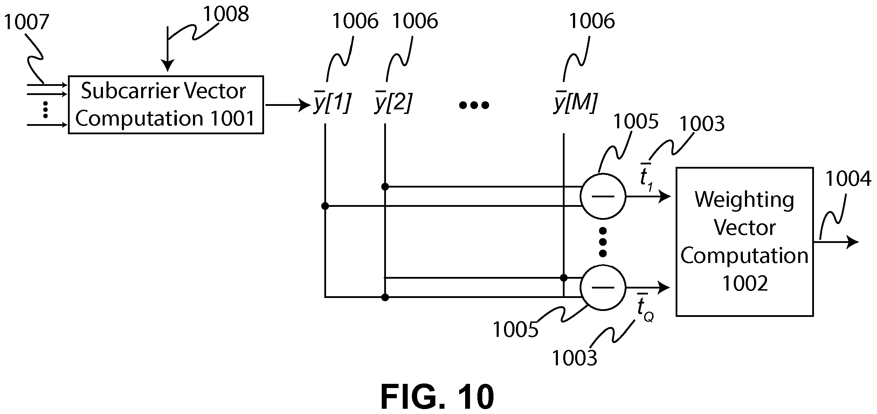

FIG. 10 illustrates the method used for determining the initial weighting vector to be applied as part of the OFDM demodulation process. The process follows a similar procedure as outlined for the packet detection process but with several differences. The transform vector computation 1001 outputs vectors **1006** at regular intervals. The subcarrier vector computation **1001** is similar to that used as part of the detection algorithm described in FIG. 4 with the noted exception that the bandwidth of the filter selected by **401** is always equal to or greater than the signal bandwidth. Assuming we are at the (L-)LTF section of the packet and have the correct frequency offset, the output vectors **1006** will have a constant vector component for the duration of the (L-)LTF corresponding to the desired signal plus additional non-constant vector components corresponding to interfering sources which could be other 802.11 signals as well as non 802.11 signals. For each subcarrier, these vectors may be represented by

$$\overline{y}[m] = \overline{c}\, s + \sum_{i=1}^{I} \overline{c}_{INT,i} x_i[m]$$

where *y[m]* is the signal vector **1006** at a particular time instant, *c* is the channel response vector for the desired signal, *s* is the (L-)LTF symbol transmitted by the client at that subcarrier, *I* is the total number of interferers, $c_{INT,i}$ is the channel response vector for the $i^{th}$ interference source, and $x_i(t)$ is the frequency domain transform of the $i^{th}$ interference source signal at the current subcarrier. The various output vectors **1006** will span the space of both the desired signal *cs* and

all the interfering sources $\sum_{i=1}^{I} \overline{c}_{INT,i} x_i[m]$. By subtracting different combinations of these vectors **1005** yields an intermediate set of Q vectors $(t_1, ..., t_Q)$. Because the desired signal *cs* within *y[m]* is constant, the resultant vectors

$(t_1, ..., t_Q)$ produced by finding the difference in Q combinations of $y[m]$ will have no component of the desired channel response $c$ but will be a linear combination of the interfering vectors. For example, subtracting $y[2]$ from $y[1]$ provides

$$\bar{y}[1] - \bar{y}[2] = \sum_{i=1}^{I} \bar{c}_{INT,i}(x_i[1] - x_i[2])$$

which is a linear combination of the interfering channel vectors only. The weighting vector computation **1002** accepts the intermediate vectors $(t_1, ..., t_Q)$ and finds a vector orthogonal to the interfering vector space but not orthogonal to the desired signal space. This vector may be determined in practice starting with $y[m]$, using Gram-Schmidt orthogonalization to produce an orthonormal basis $(v_1, ..., v_Q)$ from $(t_1, ..., t_Q)$, and then subtracting the components of $y[m]$ that lie within the span of $(v_1, ..., v_Q)$ according to

$$\bar{z} = \bar{y}[m] - \sum_{q=1}^{Q} \bar{v}_q^h \bar{y}[m]$$

where $z$ is a the vector orthogonal to the interference channel vectors. The weighting vector is formed by normalizing $z$ according to

$$\overline{w} = \frac{\bar{z}}{\sqrt{\bar{z}^h \bar{z}}}$$

where $w$ is used to isolate the desired information from interfering signals at the computed subcarrier index. Although the computation above shows the computation of a single weighting vector, the process can easily be extended to produce multiple weighting vectors rather than just one. Multiple weighting vectors are used for the demodulation of 802.11n/ac packets which may have more than one spatial stream and therefore use multiple inputs per subcarrier as part of the demodulation process. In the case where multiple weighting vectors are required, we would want to ensure that each weighting vector maintains the property of being orthogonal to the interfering channel vectors. Assume there are N input signals corresponding to N antennas receiving a signal simultaneously. Assume the dimension of the interfering vector space is Q. There will therefore be N-Q possible weighting vectors to provide N-Q unique subcarrier inputs to the OFDM demodulation. The N-Q weighting vectors could be found by starting with the Q orthonormal vectors $(v_1, ..., v_Q)$ and then extending the Gram-Schmidt orthogonalization to determine an additional $N-Q$ orthonormal vectors. These $N-Q$ vectors would each be orthogonal to each other as well as the interfering vectors space.

The method used to determine the initial weighting vector discussed previously can be formed by the end of the (L-)LTF which is significant as it allows the proceeding signal field OFDM symbol(s) to be demodulated as they arrive. The signal field of the Wi-Fi packet contains information related to the length of the packet and modulation parameters in use. Being able to decode the signal field as it arrives allows the receiver to properly re-configure for reception of the data portion of the packet prior to the data symbols arriving. The initial weighting vector is generally suboptimal in that it does not attempt to maximize the signal to interference ratio (SIR), but is generally acceptable for decoding the signal field as the signal field is transmitted at a robust modulation and coding scheme which is tolerant to low SIR. Demodulating the data portion of the packet, however, will generally benefit from a more optimized weighting vector as the data may be transmitted using a high order constellation type such as 64 QAM or 256 QAM which has substantially higher SIR requirements.

Embodiments consistent with the present invention form a more optimized weighting vector by performing a statistical characterization of different subsets of signals within the environment and then finds a solution that enables separation of the signal of interest from all other signals. This is accomplished primarily through formation of two different covariance matrices where a covariance matrix in the context of multi-antenna receivers computes the covariance between the various signals present on the antenna elements and stores the covariance between all signal pairs in matrix form. Analysis of a covariance matrix provides understanding of the cumulative effect of the channel vectors for the signals contributing to the covariance matrix. Throughout this disclosure, the covariance matrices are discussed in the context of one subcarrier with the assumption that the methods would be applied equally to all subcarriers of interest. Embodiments consistent with the present invention rely on estimating one covariance matrix that would be observed assuming only the interfering signals are present at the receive antenna elements. Assuming no noise and only the interfering signals are present on the antennas, the covariance matrix of the interfering signals would be given by

$$\bar{\bar{R}}_{INT} = \sum_{i=1}^{I} \bar{c}_{INT,i}\ \bar{c}_{INT,i}^{h}\ E[|x_i|^2].$$

Embodiments consistent with the present invention additionally rely on estimating a covariance matrix that would be observed assuming both intended and interfering signals are present at the receive antenna elements. Assuming no noise and both intended and interfering signals being present, the covariance matrix of all sources would be given by

$$\bar{\bar{R}} = \bar{c}\ \bar{c}^{h}\ E[|s|^2] + \sum_{i=1}^{I} \bar{c}_{INT,i}\ \bar{c}_{INT,i}^{h}\ E[|x_i|^2].$$

If the estimates of both $\bar{\bar{R}}_{INT}$ and $\bar{\bar{R}}$ are reasonably accurate, simply subtracting $\bar{\bar{R}}_{INT}$ from $\bar{\bar{R}}$ provides an estimate of the matrix $c\ c^h\ E[|s|^2]$ which could be used to indirectly determine the channel vector of the intended source using singular value decomposition. Additionally, singular value decomposition of $R_{INT}$ provides a set of orthonormal vectors $[u_1\ u_2 ... u_P]$ and corresponding singular values $[SV_1\ SV_2 ... SV_P]$ which together allow for the determination of the amount of interference signal power depending on the weighting vector applied. Given $c$ along with the singular value decomposition of $R_{INT}$ provides sufficient information to determine a weighting vector to separate the intended signal from the interfering signals. One approach to find the weighting vector would be to form a matrix given by

$$\bar{\bar{G}} = \begin{bmatrix} \bar{c} & \sqrt{SV_1}\bar{u}_1 & \sqrt{SV_2}\bar{u}_2 & ... & \sqrt{SV_P}\bar{u}_P \end{bmatrix}$$

and apply a linear equalization technique such as the zero-forcing algorithm

$$\frac{\bar{\bar{G}}^h}{\bar{\bar{G}}^h\bar{\bar{G}}}$$

or apply the minimum mean-square-error algorithm

$$\frac{\bar{\bar{G}}^h}{\left(\bar{\bar{G}}^h\bar{\bar{G}} + \rho^{-1}\ I\right)}$$

where $\rho$ is a signal to noise ratio estimate and $I$ is an identity matrix. In either case, the first column vector from the resultant matrix would be used as the weighting vector to separate the intended signal from the interfering signals. Starting with estimates of $\bar{\bar{R}}$ and $\bar{\bar{R}}_{INT}$, those familiar with the art would realize many additional techniques could be applied to form an appropriate weighting vector.

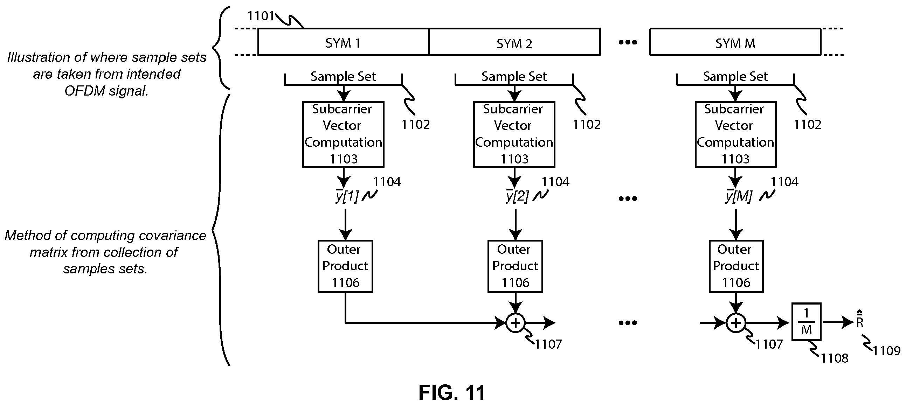

FIG. 11 illustrates the method of estimating $\bar{\bar{R}}$. For each OFDM symbol used as part of the estimation of $\bar{\bar{R}}$, a sample set **1102** is taken from each receive antenna. The sample sets **1102** taken at each OFDM symbol are then passed to the subcarrier vector computation **1103** as described in FIG. 4 resulting in a subcarrier vector **1104**. The subcarrier vector **1104** is then passed to the outer product computation block **1106** which computes a matrix given by the outer product of the subcarrier vector with itself given by

$$\bar{y}[m]\bar{y}^h[m]$$

The resulting matrix is then added **1107** to any previously accumulated outer product matrix results. After the computation has completed for all $M$ symbols used as part of the computation, the accumulated matrix is divided by $M$ as shown in **1108** providing $\hat{\bar{R}}$ **1109** which is the estimate of $\bar{\bar{R}}$.

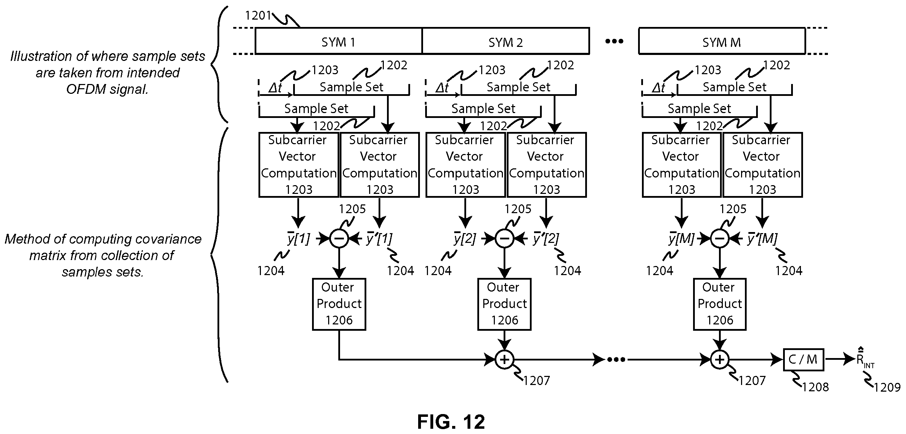

FIG. 12 illustrates the method of estimating $\overline{\overline{R}}_{INT}$ in the case of blind demodulation in which no prior knowledge of the channel, interferers, or symbol states of the OFDM symbols is available to assist in demodulation. For each OFDM symbol used as part of the estimation of $\overline{\overline{R}}_{INT}$, two sample sets **1202** are taken from each receive antenna. The sample sets are selected such that there is some relative time difference **1203** between the two sample sets but with both samples sets being within the boundaries of one OFDM symbol of the intended signal. This method does require knowledge of the OFDM symbol boundaries prior to execution, but the OFDM symbol boundaries are known from the packet detection algorithm and information available from demodulating the signal field. Just as in the case of the packet detection and initial weighting vector computation, we expect $c\,s$ to remain constant for sample sets taken within one OFDM symbol. A difference vector is then computed by subtracting one of the signal vectors from the other signal vector taken within the same OFDM symbol. The result of the difference operation **1205** is a linear combination of the interference vectors but with no component of the desired channel response vector $c$ because $c\,s$ is equal in each subcarrier vector going into the difference operation. The difference vector is then passed to the outer product **1206** which computes a matrix given by the outer product of the difference vector with itself. The resulting outer product is then added **1207** to any previously accumulated results. After the computation has completed for all M symbols used as part of the computation, the accumulated matrix is multiplied by $C/M$ **1208** where C is a scaling factor depending on the spacing and type of transform used. The result provides $\hat{\overline{\overline{R}}}_{INT}$ **1209** which is an estimate of $\overline{\overline{R}}_{INT}$. The estimates of $\overline{\overline{R}}$ and $\overline{\overline{R}}_{INT}$ formed as described in FIG. 11 and FIG. 12 provides for determination of a weighting vector as previously discussed.

An interesting aspect of the method disclosed is that it estimates $\overline{\overline{R}}$ and $\overline{\overline{R}}_{INT}$ without any knowledge of the symbol information transmitted within each OFDM symbol. The methods used to compute $\overline{\overline{R}}$ and $\overline{\overline{R}}_{INT}$ can therefore be applied directly to the data portion of the packet in which the symbol states are not know ahead of time. This is used for 802.11n and 802.11ac packet types as certain subcarriers are only populated in the data portion of the packet and the data portion of the packet generally applies different transmit parameters in comparison to the beginning of the packet that result in the apparent channel response vector changing at the transition from the signal fields to the data portion of the packet.

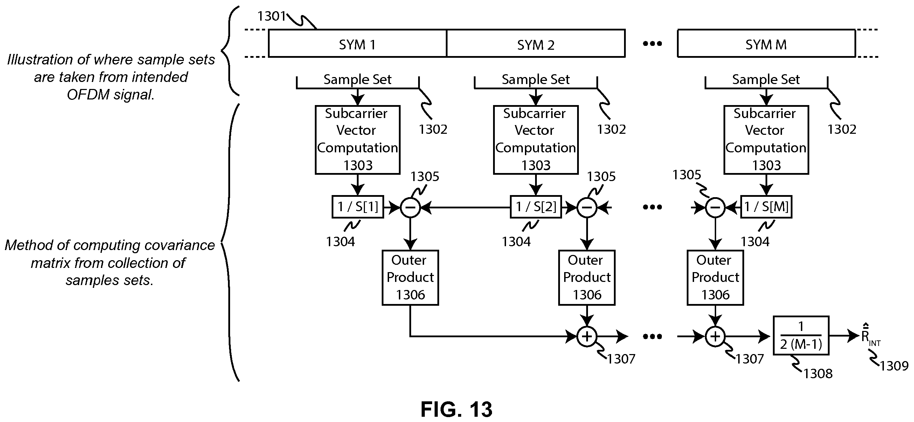

FIG. 13 illustrates an alternative method of estimating $\overline{\overline{R}}_{INT}$ in which the symbol states of the OFDM symbols are known. For each OFDM symbol used as part of the estimation of $\overline{\overline{R}}$, a sample set **1302** is taken from each receive antenna. The sample sets **1302** taken at each OFDM symbol are then passed to the subcarrier vector computation **1303** as described in FIG. 4 resulting in a subcarrier vector. The subcarrier vector is then divided by the known symbol state **1304** for the corresponding OFDM symbol at that subcarrier. For the desired signal, dividing the subcarrier vector by the known symbol state results in a vector that is $c$ plus a linear combination of the interfering channel vectors. Given that the result of the output of **1304** will be the sum of $c$ plus a linear combination of the interfering channel vectors for each OFDM symbol, taking the difference **1305** between two such vectors will result in a vector that is a linear combination of the interference vectors only. The difference vector is then passed to the outer product **1306** which computes a matrix given by the outer product of the difference vector with itself. The resulting matrix is then added to any previously accumulated results in **1307**. After the computation has completed for all *M* symbols used as part of the computation, the accumulated matrix is multiplied by $1/2(M - 1)$ **1308.** The result provides $\hat{\overline{\overline{R}}}_{INT}$ **1309** which is an estimate of $\overline{\overline{R}}_{INT}$. The use of $\overline{\overline{R}}$ and $\overline{\overline{R}}_{INT}$ using the methods described in FIG. 11 and FIG. 13 allows for determination of a weighting vector as previously discussed.

The method for estimating $\overline{\overline{R}}_{INT}$ depicted in FIG. 13 is generally more accurate than that depicted in FIG. 12, but requires knowledge of the symbol states. This technique is always applicable to pilot subcarriers as the pilot subcarriers are known by the receiver. This technique may also be applied to the data subcarriers if the receiver first demodulates the packet using another technique, determines what the ideal symbol states were, and then applies this technique to find a more accurate estimate of $\overline{\overline{R}}_{INT}$ Such an approach where this technique is applied to the data subcarriers after demodulation is beneficial in situations where the same sources of interference are expected when receiving subsequent packets. This is often the case for Wi-Fi in which devices tend to send multiple packets once they have gained access to the channel. Therefore, the method illustrated in FIG 12. may be used as part of the computation of the weighting vectors for the first received packet from a device and FIG 13. may subsequently be used to refine the weighting vector in preparation for receiving additional packets from the same device while expecting the same set of interferers.

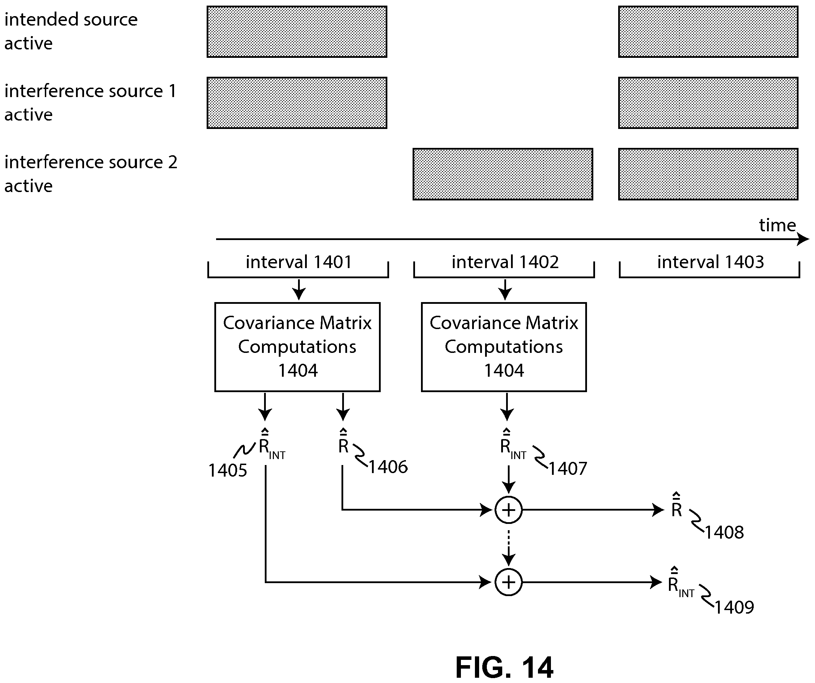

The method for estimating $\overline{\overline{R}}_{INT}$ and $\overline{\overline{R}}$ depicted in FIG. 11, FIG. 12, and FIG. 13 are directly applicable to cases in which the intended source and all sources of interference are present at the same time. There may arise circumstances when the sources of interference occur over disjoint time spans and it would be useful to find weighting vectors that would be applicable to future cases involving all interference sources being present simultaneously. Consider FIG. 14 illustrating a case in which an intended source and two interfering sources exist and the various sources are active at different times. The receiver would first encounter interval **1401** where the intended source is active at the same time as interference source 1. Utilizing the methods described previously, a receiver would attempt to determine a weighting vector to recover the signal from the intended source while in the presence of interference source 1. The receiver would later encounter interval **1403** where the intended source is active at the same time as interference source 1 and interference 2. The weighting vector computed for interval **1401,** however, would not be applicable in this case to recover the signal from the intended source as the original weighting vector was not computed over a period of time that interference source 2 was active. Assume that we know a-priori that interference source 2 would be active over interval **1402.** The method of computing the covariance method as described in FIG. 11 could be used over interval **1402** noting that in this case it would be used to estimate $\overline{\overline{R}}_{INT}$ rather than $\overline{\overline{R}}$ and that there would be no requirement to determine the OFDM symbol boundaries as in the previous cases. $\hat{\overline{\overline{R}}}_{INT}$ and $\hat{\overline{\overline{R}}}$ for interval **1403** could then be directly estimated from the covariance matrices computed over interval **1401** an interval **1402.** Specifically, $\hat{\overline{\overline{R}}}_{INT}$ **1408** corresponding to interval **1403** would be estimated by the summation of $\hat{\overline{\overline{R}}}_{INT}$ **1405** corresponding to interval **1401** and $\hat{\overline{\overline{R}}}_{INT}$ **1407** corresponding to interval **1402.** $\hat{\overline{\overline{R}}}$ **1409** corresponding to interval **1403** would be estimated by the summation of $\hat{\overline{\overline{R}}}$ **1406** corresponding to interval **1401** and $\hat{\overline{\overline{R}}}_{INT}$ **1407** corresponding to interval **1402.** The estimates of $\hat{\overline{\overline{R}}}_{INT}$ and $\hat{\overline{\overline{R}}}$ corresponding to interval **1403** could then be used to determine an a-priori weighting vector for interval **1403** to resolve the intended source with both interfering source 1 and 2 active.

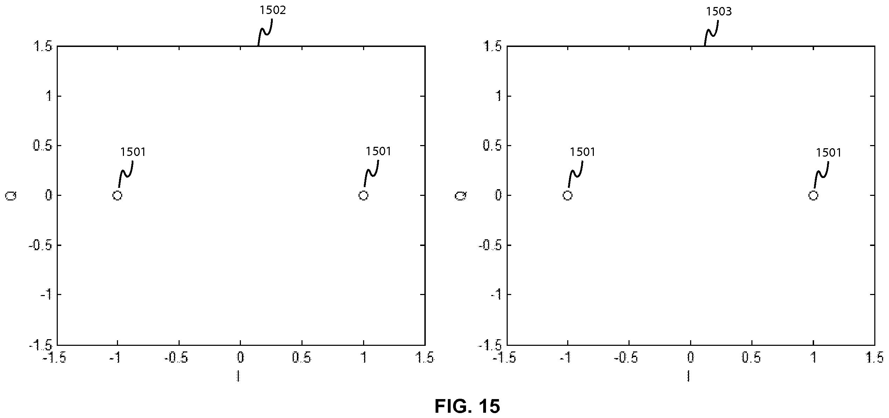

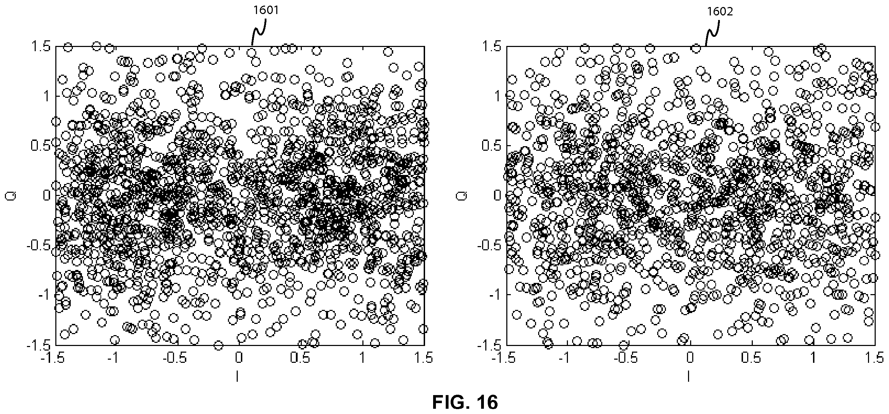

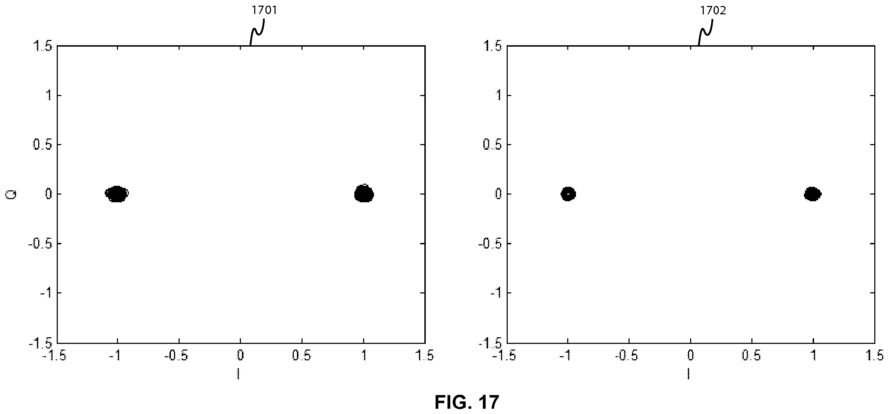

FIG. 15, FIG. 16, and FIG. 17 provide results of using the algorithms described herein to demodulate two WLAN OFDM signals simultaneously. These results illustrate the case when two client devices transmit two different 802.11 signals simultaneously and the disclosed methods are employed to demodulate the signals. FIG. 15 illustrates the binary phase shift keying (BPSK) symbols transmitted from each of the two client devices. The transmitted symbol states for both devices falls very near the ideal BPSK symbol positions **1501.** FIG. 16 illustrates the received constellation using a conventional 802.11 PHY architecture. The illustration shows that the received symbol states do not seem to present any meaningful reception of the transmitted data as would be expected given a conventional architecture has no means of separating and demodulating interfering OFDM signals. FIG. 17 illustrates the received symbol states using the disclosed methods and illustrates the transmitted symbols are able to be recovered to a high degree of accuracy using the methods presented herein.

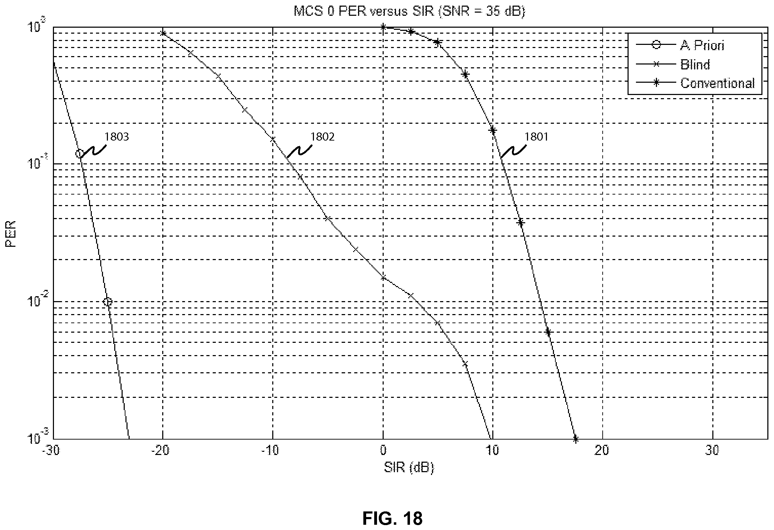

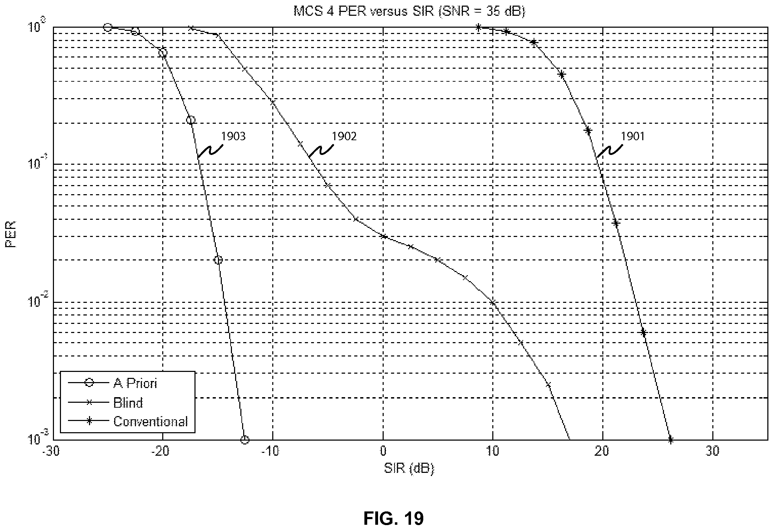

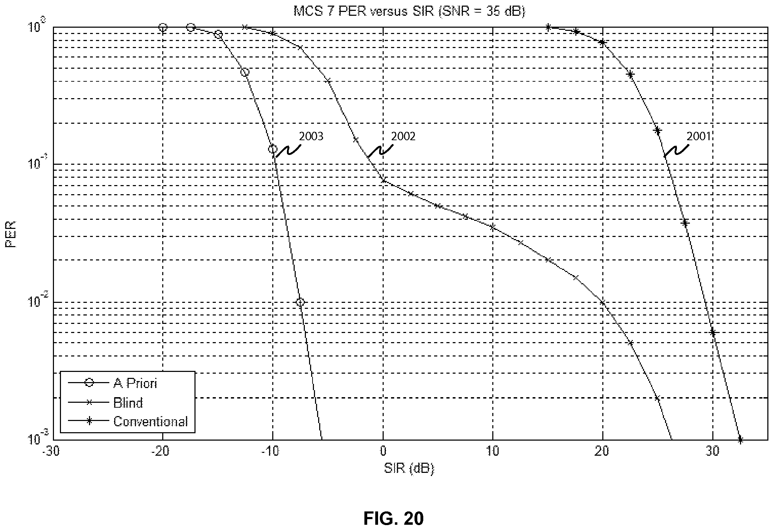

FIG. 18, FIG. 19, and FIG. 20 provide results showing the packet error rate (PER) performance for the methods described herein in comparison to a conventional receiver. For all figures, the results are based on a simulation in which 8 antenna elements are used to receive signals from 3 signal sources. In all cases, the signal types are 20 MHz 802.11n packets. The average signal to noise ratio (SNR) in all cases is maintained at a constant 35 dB relative to the strongest received signal. FIG. 18 provides PER versus signal to interference ratio (SIR) curves for 802.11n modulation and coding scheme 0 which is BPSK modulated with 1/2 rate convolution coding forward error correction. The three different curves correspond to a conventional receiver **1801,** a receiver utilizing the methods described in FIG. 11 and FIG. 12 for blind demodulation **1802,** and the methods described in FIG. 11 and FIG. 13 in which a priori symbol state information is available **1803.** For a PER of 10%, FIG. 18 illustrates that a conventional receiver would need roughly 11 dB of SIR to achieve 10% PER. This means that a conventional receiver would need the intended signal to be roughly 11 dB stronger than the interfering signal power to function properly. In contrast, embodiments of the present invention applying blind demodulation techniques achieves 10% PER with -8 dB SIR which is a 19 dB improvement over a conventional receiver. By refining the solution further using the information gained from successfully demodulated packets, embodiments of the present invention would converge to achieving 10% PER at -27 dB providing a 38 dB improvement over a conventional receiver. FIG. 19 provides PER versus SIR curves for 802.11n modulation and coding scheme 4 which is 16-QAM modulated with 3/4 rate convolution coding forward error correction. The three curves correspond to a conventional receiver **1901,** a receiver utilizing the methods described in FIG. 11 and FIG. 12 for blind demodulation **1902,** and the methods described in FIG. 11 and FIG. 13 in which a priori symbol state information is available **1903.** For a PER of 10%, FIG. 19 illustrates that a conventional receiver would need roughly 19 dB of SIR to achieve 10% PER. In contrast, embodiments of the present invention applying blind demodulation techniques achieves 10% PER with -6.5 dB SIR which is a 25.5 dB improvement over a conventional receiver. By refining the solution further using the information gained from successfully demodulated packets, embodiments of the present invention would converge to achieving 10% PER at -17 dB providing a 36 dB improvement over a conventional receiver. FIG. 20 provides PER versus SIR curves for 802.11n modulation and coding scheme 7 which is 64-QAM modulated with 5/6 rate convolution coding forward error correction. The three curves correspond to a conventional receiver **2001,** a receiver utilizing the methods described in FIG. 11 and FIG. 12 for blind demodulation **2002,** and the methods described in FIG. 11 and FIG. 13 in which a priori symbol state information is available **2003.** For a PER of 10%, FIG. 20 illustrates that a conventional receiver would need roughly 26 dB of SIR to achieve 10% PER. In contrast, embodiments of the present invention applying blind demodulation techniques achieves 10% PER with -1.5 dB SIR which is a 27.5 dB improvement over a conventional receiver. By refining the solution further using the information gained from successfully demodulated packets, embodiments of the present invention would converge to achieving 10% PER at -9 dB providing a 35 dB improvement over a conventional receiver.

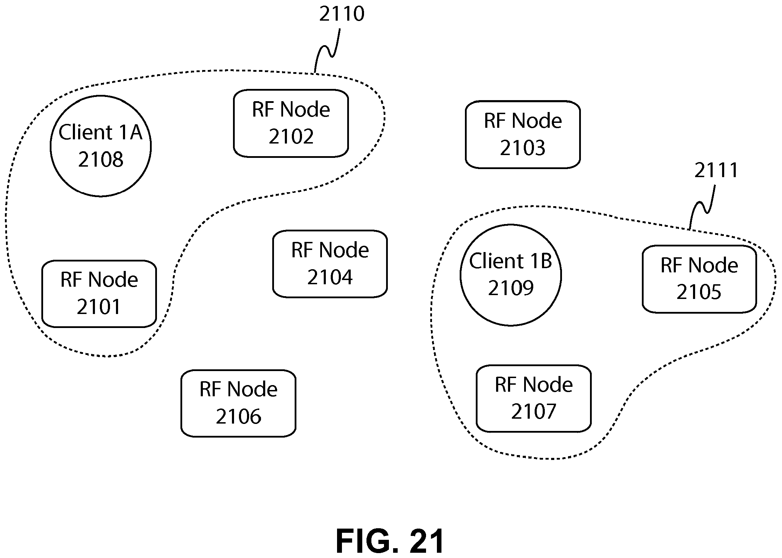

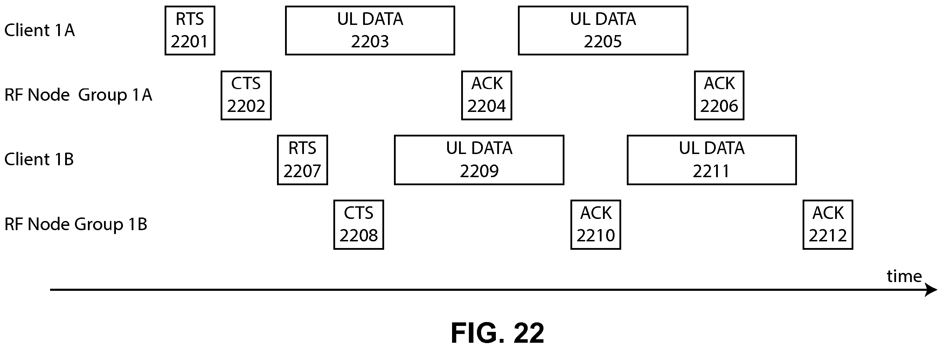

An advantage of embodiments of the present invention includes the enablement of UL MU-MIMO. UL MU-MIMO requires the ability to receive multiple signals simultaneously, but additionally requires the ability to transmit responses to individual client devise as needed. Given that WLAN client devices will not be synchronized in any manner, UL MU-MIMO for WLAN requires the ability to simultaneously receive from one or more client devices while simultaneously transmitting to one or more other client devices. Consider FIG. 21 in which RF Nodes **2101, 2102, 2103, 2104, 2105, 2106,** and **2107** are used to simultaneously receive UL transmissions from Client 1A **2108** and Client 1B **2109**. Although not explicitly shown, it is assumed that all RF Nodes shown connect to an aggregator is previously described in FIG. 1, FIG. 2, and FIG. 3. Further consider FIG. 22 which illustrates a potential set of packet exchanges corresponding to the devices illustrated in FIG. 21. In FIG. 22, each row provides a timeline of when packets originate from a particular client device or set of RF nodes. FIG. 22 illustrates a scenario in which Client 1 initiates an UL data transmission by sending a request to send (RTS) packet **2201**. The aggregator could send a response to Client 1A **2108** through all RF nodes, but would then be unable to receive other incoming RF signals. The aggregator may instead choose to reply to RTS **2201** using RF Node **2101** and RF Node **2102** which together form RF Node Group 1A **2110** which is in the immediate vicinity with Client 1A **2108**. Considering the physical separation between RF Node **2101** and RF Node **2202** from the other RF Nodes, transmitting on RF Node **2101** and RF Node **2102** does not prevent the remaining RF Nodes from simultaneously being used for reception. At some later point in time, Client 1A **2108** begins sending UL DATA **2203** at approximately the same time when Client 1B **2109** sends an RTS **2207** to initiate sending UL data. At the end of the RTS **2207,** the aggregator will simultaneously be able to continue reception of UL DATA **2203** and send a response to RTS **2207**. The aggregator may choose to reply to RTS **2207** using RF Node **2105** and RF Node **2107** which together form RF Node Group 1B **2111** which is in the immediate vicinity with Client 1B **2109.** Due to the unsynchronized nature of WLAN, there are various other examples where simultaneous reception and transmission are needed. The aggregator generally handles this by allocating a subset of RF Nodes to respond to Client 1A **2108** when needed, allocating another subset of RF Nodes to respond to Client 1B **2109** when needed, and retaining a subset of RF nodes exclusively to receiving. In this manner, the disclosures permits UL MU-MIMO by providing both the simultaneous reception of multiple 802.11 signals and the ability to send responses to individual client devices as needed. The invention could alternatively be performed with a different architecture performing similar functions. For example, a set of access APs each with the ability to receive multiple WLAN packets simultaneously could work in a collaborative manner in which all APs virtually share the same basic service set identifier (BSSID) to enable UL MU-MIMO. In this case, specific APs with would be assigned to handle responses to specific client devices. Such an architecture would have requirements to enable coordination as to what AP is responsible for a specific client, but the architecture would also enable UL MU-MIMO. Those familiar with the art would recognize that such an architecture still utilizes embodiments of the present invention by requiring the ability to receive multiple WLAN signals simultaneously on the various APs and the ability to use one set of antennas (in this case, an AP) to communicate to one client device and another set of antennas (in this case, another AP) to communicate to another client.

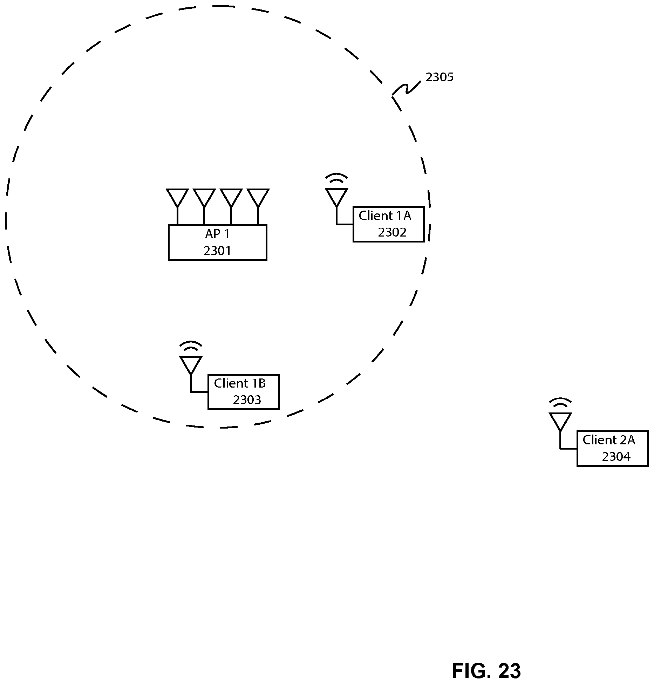

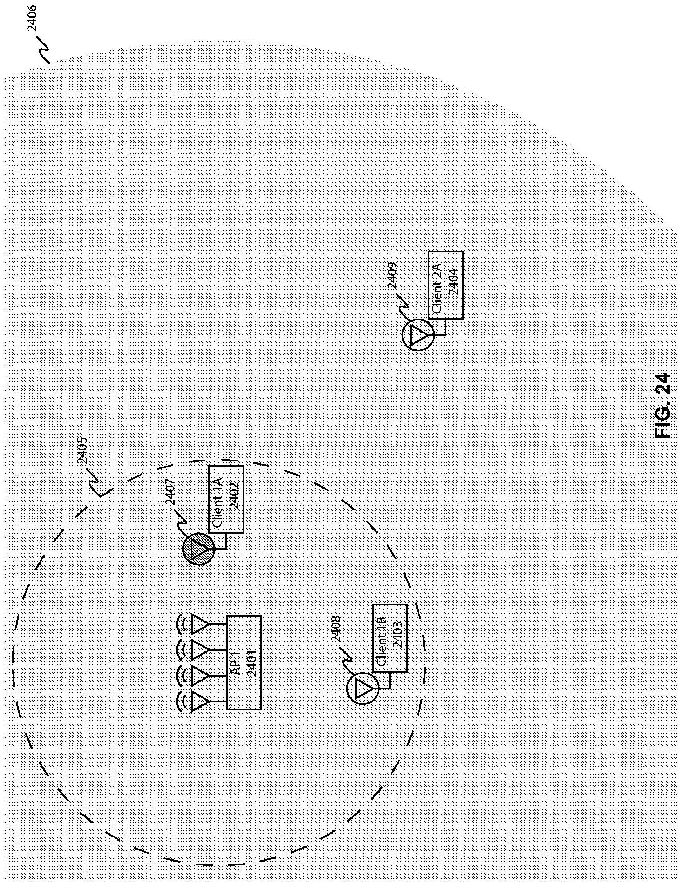

Another advantage of embodiments of the present invention is the enablement of efficient DL MU-MIMO and improvements in WLAN scalability. This result derives from the principles of electromagnetic reciprocity, the fact that WLAN utilizes the same frequency for both UL and DL transmissions, and that embodiments of the present invention inherently find a weighting vector solution specific to each client which minimizes interference from all perceived interference sources. Consider FIG. 23 in which AP 1 **2301** is receiving while signals from Client 1A **2302,** Client 1B **2303,** and Client 2A **2304** are transmitted. Client 1A **2302** and Client 1B **2302** are within the intended coverage area **2305** of AP 1 **2301** and it is therefore assumed in this case that AP 1 **2301** is able to demodulate the signals from these devices. Client 2A **2304** is well outside the intended coverage area **2305** and therefore the signal from Client 2A **2304** may be too week to AP 1 **2301** to demodulate but could still provide significant interference. For the remainder of this discussion, the term AP will be used to refer to either a conventional WLAN AP or a combination of aggregator and RF nodes as described in FIG. 1, FIG. 2, and FIG. 3 which perform a similar function as a conventional WLAN AP. Assume AP 1 **2301** determines a weighting vector that allows for the reception of the signal from Client 1A **2302** while simultaneously suppressing interference caused by the signals from Client 1B **2303** and Client 2A **2304.** Now consider FIG. 24 in which AP 1 **2401** transmits information to Client 1A **2402** using the same weighting vector that was determined for the reception of the signal from Client 1A **2402**. The RF signal energy from AP 1 **2401** generally extends well beyond the intended coverage area **2405** and propagates to a much larger area **2406** that is detectable by other WLAN devices. The use of the weighting vector will concentrate signal power specifically in local area **2407** corresponding to the antenna of Client 1A **2402**. Additionally, the use of the weighting vector will reduce the signal power in local areas **2408** and **2409** corresponding to the antennas of Client 1B **2403** and Client 2A **2404** respectively which were the perceived sources of interference when forming the weighting vector. Therefore, although embodiments of the present invention don't constrain the RF signal within the intended coverage area **2405** in comparison to existing technology, it does boost the signal to the desired client while reducing signal power to areas which were the perceived sources of interference while receiving.

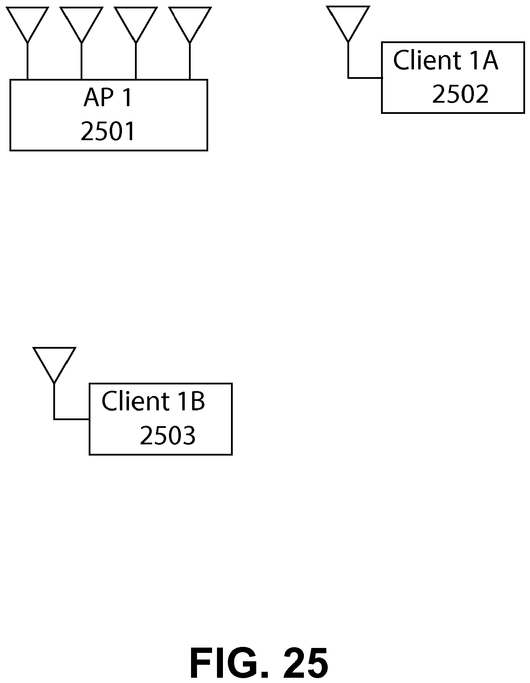

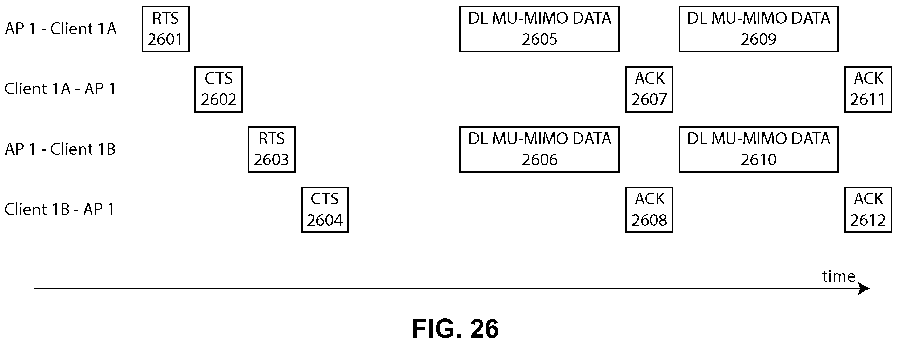

The invention utilizes the properties of the weighting vectors illustrated in FIG. 24 to enable DL MU-MIMO as illustrated in FIG. 25 and FIG. 26. FIG. 25 illustrates an AP **2501** which may choose to transmit information to Client 1A **2502** and Client 1B **2503** simultaneously. Although FIG. 25 depicts an AP communicating with two clients, embodiments of the present invention are applicable in scenarios with a different number of client devices. FIG. 26 illustrates one possible protocol that could be used to provide a DL MU-MIMO transmissions to client devices **2502** and **2503**. Each row of the diagram corresponds to the flow of packets from one device to another device. Specifically, the top row of FIG. 26 represents packets from AP 1 **2501** to Client 1A **2502**, the second row represents packets from Client 1A **2502** to AP 1 **2501**, the third row represents packets from AP 1 **2501** to Client 1B **2503**, and the fourth row represents packets from Client 1B **2503** to AP 1 **2501**. AP 1 **2501** would initiate a DL MU-MIMO transmission by sending a request to send (RTS) packet **2601** to Client 1A **2502**. Client 1A **2502** would then respond with a clear to send (CTS) packet **2602**. AP 1 **2501** would then send a RTS packet **2603** to and receive a CTS packet **2604** from Client 1B **2503**. For each client, the AP would form a weighting vector specifically for that client from the information received from the reception of CTS packets **2602** and **2604** using the methods described in FIG. 14 in which the covariance matrices are computed over disjoint time intervals corresponding to the CTS packets **2602** and **2604**. Using these weighting vectors, the AP would transmit DL MU-MIMO data packets **2605** and **2606** destined for Client 1A **2502** and Client 1B **2503** respectively. Client 1A **2502** and Client 1B **2503** would then respond with acknowledgement (ACK) **2607** and **2608** respectively. Given the ability to receive multiple packets simultaneously, AP 1 **2501** would be able to determine which client devices received the information sent. Additionally, reception of the ACK packets simultaneously would allow AP 1 **2501** to update the weighting vectors used for the transmission and reception of future packets. The process would be repeated with the AP sending additional DL MU-MIMO data packets **2609** and **2610** simultaneously and client devices sending ACK packets **2611** and **2612** upon successful reception of their respective data packets. This process of the AP sending DL MU-MIMO transmissions and the client devices sending ACK packets could be repeated numerous times until all the desired information was delivered to the various client devices. Those familiar with the art would recognize there are alternative protocols that may be utilized to provide for DL MU-MIMO transmissions utilizing the ability to receive multiple packets simultaneously. For example, the protocol could alternatively use block acknowledgement requests (BAR) and block acknowledgements (BA) rather than ACKs to determine if the packets were received and update channel information. Such variations, however, would still be performed with the AP sending information to a group of devices simultaneously and receiving a response from the same group of clients simultaneously and therefore does not change the intent of embodiments of the present invention.

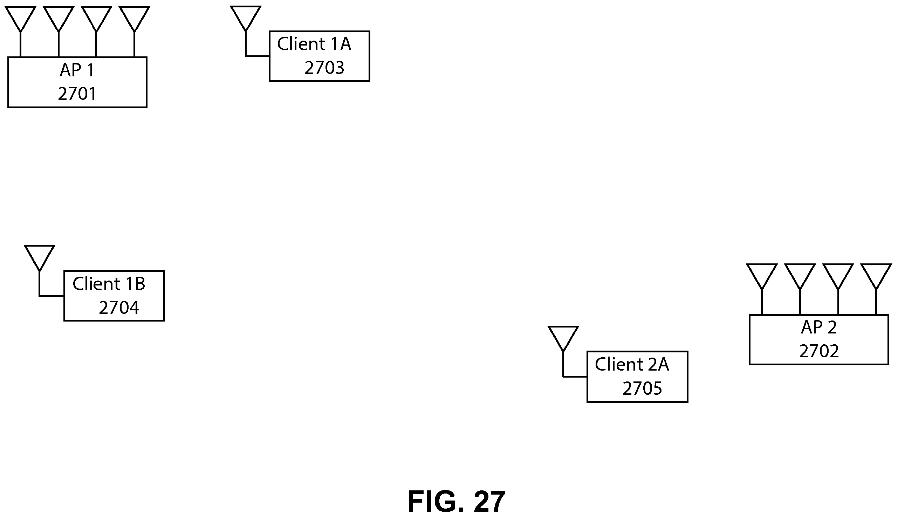

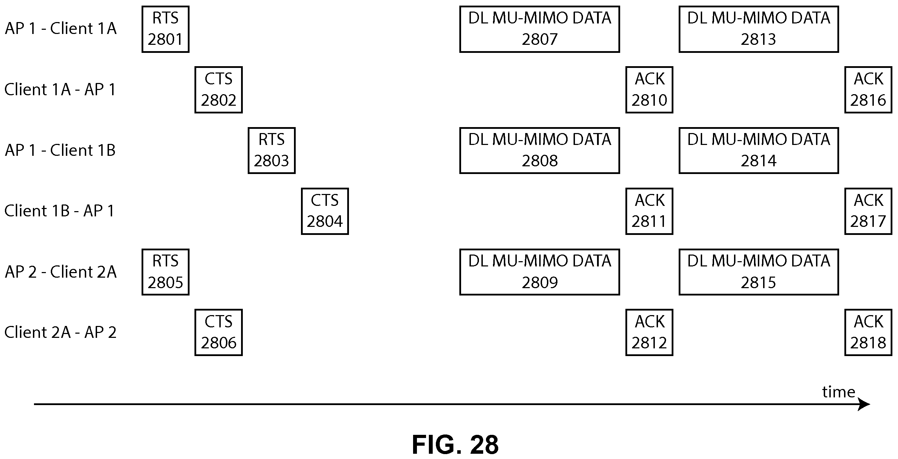

In addition to enabling efficient DL MU-MIMO within an intended coverage area of one AP, embodiments of the present invention also intrinsically reduces interference between DL MU-MIMO transmissions originating from different APs by synchronizing transmissions. Consider FIG. 27 in which AP 1 **2701** wishes to send DL data to Client 1A **2703** and Client 1B **2704** simultaneously. At the same time, AP 2 **2702** wishes to send DL data to Client 2A **2705**. Assume both AP 1 **2701** and AP 2 **2702** have the ability to synchronize their transmissions to a predetermined schedule as illustrated in FIG. 28. AP 1 **2701** and AP 2 **2702** would transmit RTS packets **2801** and **2805** respectively with the two packets being aligned in time. Given that Client 1A **2703** is generally closer to AP 1 **2701** and that a robust modulation and coding scheme is used for the transmission of RTS packets, it is reasonable to assume that Client 1A **2703** will receive RTS **2801**. Similarly, it is reasonable to assume Client 2A **2705** will receive RTS **2805**. Assuming Client 1A **2703** receives RTS **2801** and Client 2A **2705** receives RTS **2805**, CTS packets **2802** and **2806** would be transmitted from Client 1A **2703** and Client 2A **2705** respectively with both being fairly aligned in time as the standard dictates a specific response time in which devices should respond to RTS packets. Given the ability to receive multiple packet simultaneously and in the presence of interference, CTS **2802** should be received by AP 1 **2701** and CTS **2806** should be received by AP 2 **2702**. AP 1 **2701** would additionally transmit RTS **2803** to and receive CTS **2804** from Client 1B **2704**. For each client, the APs would form a weighting vector specifically for that client from the information received over the intervals of CTS packets **2802, 2804,** and **2806** using the methods described in FIG. 14 in which the covariance matrices are computed over disjoint time intervals. Using these weighting vectors, the AP would transmit DL MU-MIMO data packets **2807, 2808,** and **2809** destined for Client 1A **2702**, Client 1B **2703**, and Client 1C **2704** respectively. Client 1A **2703**, Client 1B **2704**, and Client 2A **2705** would then respond with acknowledgement (ACK) **2810, 2811,** and **2812** respectively. Given the ability to receive multiple packets simultaneously, the APs would be able to determine which client devices received the information sent to them. Additionally, reception of the ACK packets simultaneously would allow the APs to update the weighting vectors used for the transmission and reception of future packets. The process would be repeated with the APs sending additional DL MU-MIMO data packets **2813, 2814,** and **2815** and client devices sending ACK packets **2816, 2817,** and **2818** upon successful reception of their respective data packets. This process of the APs sending DL MU-MIMO transmissions and the client devices sending ACK packets could be repeated numerous times until all the desired information was delivered to the various client devices.

The ability to effectively minimize interference for DL MU-MIMO transmissions as illustrated in FIG. 27 and FIG. 28 relies on APs being able to synchronize transmissions. The synchronization required may be achieved in any number of ways including utilizing a timing protocol such as IEEE 1588 and/or SyncE that is transmitted over the wired backhaul connection **313** in FIG. 3, utilizing a GPS receiver in scenarios where this is practical, or by using an over the air method of synchronization. The over the air method of synchronization may be accomplished by one AP being designated as a timing master and all other APs synchronizing their internal clocks to the beacons transmitted by the master AP.

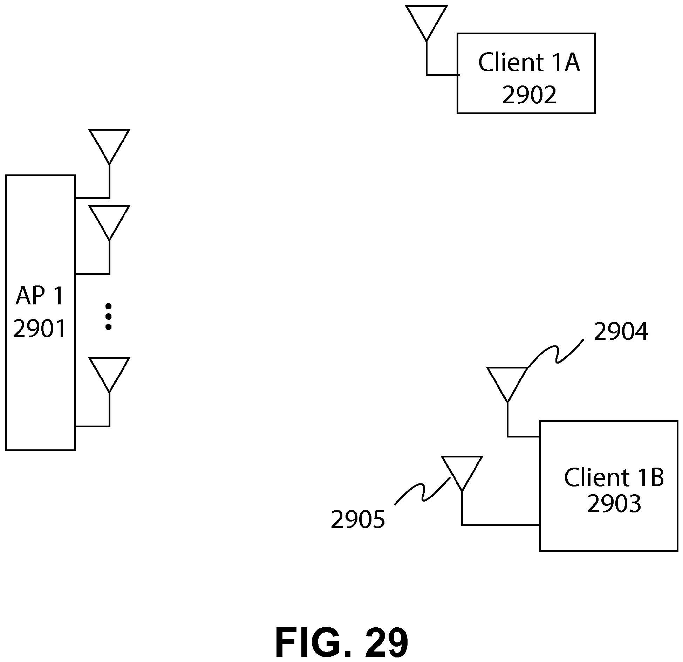

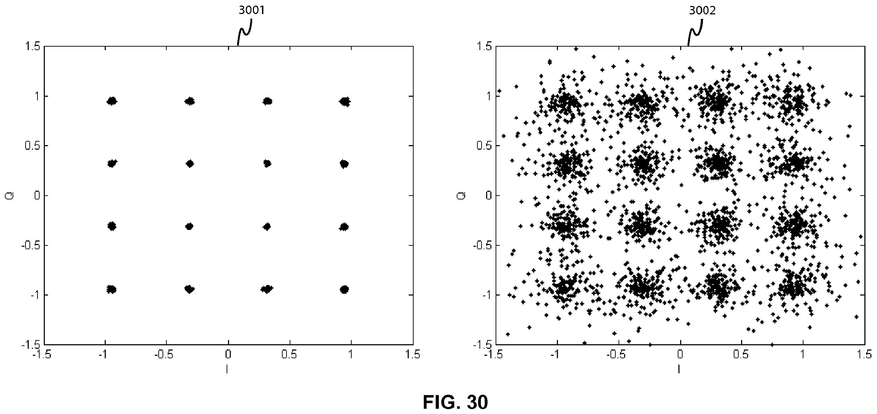

The methods described permitting DL MU-MIMO described previously rely on the AP being able to determine the channel between the antennas of the AP and client devices. FIG. 29 illustrates a scenario where AP 1 **2901** is associated to Client 1A **2902** and Client 1B **2903,** where Client 1A **2902** has one antenna and Client 1B **2903** has two antennas. For multi-antenna devices, various packet types including RTS, CTS, and ACK packets are transmitted with the same information being sent on both antennas. The result is the channel observed at AP 1 **2901** from Client 1B **2903** is a composite of the channel vectors corresponding to antenna **2904** and antenna **2905**. Assuming this composite channel vector is used as part of the weighting vector computation, energy will still be focused in the general vicinity of the Client 1B **2903,** but the signal quality is generally degraded. FIG. 30 shows the results of a test in which the methods described previously for DL MU-MIMO are used in a scenario such as FIG. 29. Both clients are at approximately the same distance from the AP and **3001** shows the received constellation for Client 1A **2902** and **3002** shows the received constellation for Client 1B **2903**. Although the constellation for Client 1B **2903** still allows for the information to be recovered which would not be possible without embodiments of the present invention, there is noticeable degradation for the constellation of the client with 2 antenna elements in comparison to the client with 1 antenna element.

WLAN devices generally apply cyclic shift diversity (CSD) to information sent from different antennas when a device has multiple antenna elements. Although the purpose of CSD is to avoid devices unintentionally concentrating energy in specific directions, the implementation results in what appears to be the information from each antenna being time delayed relative to information sent on other antennas. In addition to the purposes previously stated, embodiments of the present invention further have the ability to resolve time delays of individual signal components. This aspect of the invention in combination with CSD applied by WLAN allows embodiments of the present invention to resolve channel estimates from individual antennas in the case where the client has multiple antennas. This is beneficial for overcoming the issue described in FIG. 29 and FIG. 30.

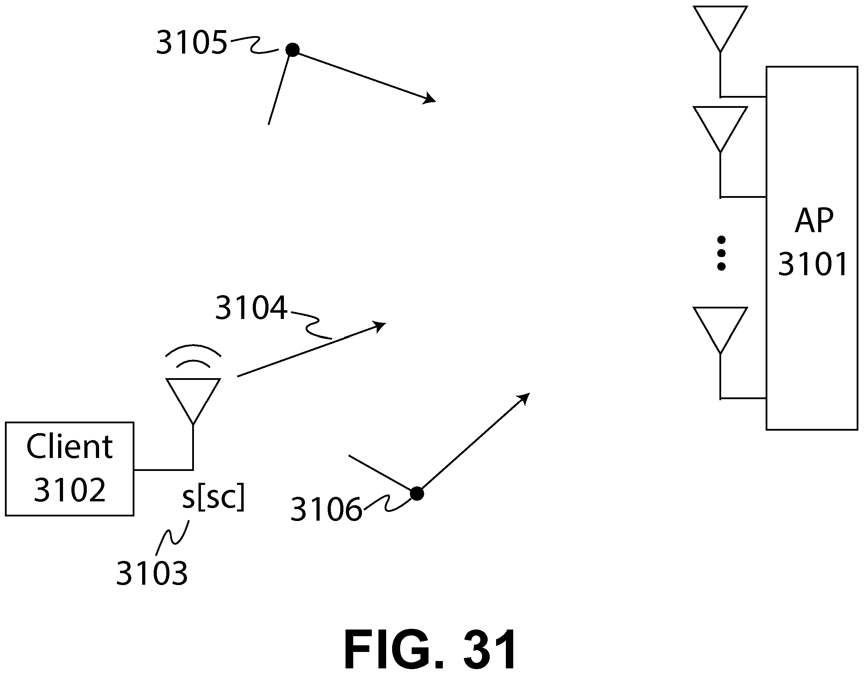

FIG. 31 illustrates Client **3102** transmitting symbol $s[sc]$ **3103** into the wireless medium and received by AP **3101**. The information travels to the AP via multiple paths **3104, 3105,** and **3106**. The signal arriving at AP **3101** will be a combination of the signals from the various paths given by

$$\bar{c}[sc] = s[sc] \sum_{p=1}^{P} \bar{c}_p \, e^{-j\,2\pi\,f_{sc}\,\tau_p}$$

where $c[sc]$ is the composite channel response vector at a particular subcarrier, $s[sc]$ is transmitted symbol at a particular subcarrier, $c_p$ is the channel response vector for the $p^{th}$ path, $f_{sc}$ is the frequency offset corresponding a to a particular subcarrier index, and $\tau_p$ is a relative delay associated with the $p^{th}$ path. Note that $c[sc]$ and $s[sc]$ are represented as functions of sc to signify that these are dependent on the subcarrier index whereas they were previously represented as constants. This is because previous derivations were all referenced to the same subcarrier index value whereas the present derivation utilizes the change in $c[sc]$ with subcarrier index. Also notice, however, that the underlying channel vectors associated with individual multi-paths are assumed to be independent of the subcarrier index. We define

$$\bar{y}[sc, \tau] = \left( \frac{\bar{c}[sc]}{s[sc]} \right) e^{j\,2\pi\,f_{sc}\,\tau}$$

where $\tau$ is an assumption as to what the delay of an individual multi-path may be. Substitution provides

$$\bar{y}[sc, \tau] = \left[ \sum_{p=1}^{P} \bar{c}_p \, e^{-j\,2\pi\,f_{sc}\,\tau_p} \right] e^{j\,2\pi\,f_{sc}\,\tau}$$

Now assume we select $\tau$ equal to $\tau_1$. In this case,

$$\bar{y}[sc, \tau_1] = \bar{c}_1 + \sum_{p=2}^{P} \bar{c}_p \, e^{-j\,2\pi f_{sc}\,(\tau_p - \tau_1)}$$

which is $c_1$ plus a linear combination of $c_2$, $c_3$,..., $c_P$. Assume we take the difference between two such vectors formed at consecutive subcarriers giving

$$\bar{y}_{diff}[sc, \tau_1] = \bar{y}[sc, \tau_1] - \bar{y}[sc + 1, \tau_1]$$

Given that both $y[sc, \tau_1]$ and $y[sc + 1, \tau_1]$ will contain $c_1$, the difference between the two vectors will contain a linear combination of $c_2$, $c_3$,..., $c_P$ given by

$$\bar{y}_{diff}[sc, \tau_1] = \sum_{p=2}^{P} \bar{c}_p \left[ e^{-j\,2\pi f_{sc_1}\,(\tau_p - \tau_1)} - e^{-j\,2\pi f_{sc_2}\,(\tau_p - \tau_1)} \right]$$

Collecting a set of N such vectors provides

$$\bar{y}_{diff}[sc, \tau_1], \bar{y}_{diff}[sc + 1, \tau_1], \dots, \bar{y}_{diff}[sc + N - 1, \tau_1]$$

with each difference vector being a different linear combination of $c_2$, $c_3$,..., $c_P$, but with no component of $c_1$. Using Gram-Schmidt orthogonalization, we may produce an orthonormal basis $(v_1, \dots, v_{N-1})$ from the set of difference vectors. We may then subtract the components of $c[sc]$ that lie within the span of $(v_1, \dots, v_{N-1})$ according to

$$\bar{z} = \bar{c}[sc] - \sum_{n=1}^{N-1} \bar{v}_n^h \bar{c}[sc]$$

where $z$ is the computed vector orthogonal to $c_2$, $c_3$,..., $c_P$. The weighting vector is formed by normalizing $z$ according to

$$\bar{w} = \frac{\bar{z}}{\sqrt{\bar{z}^h \bar{z}}}.$$

$w$ can be used to determine the energy in $c[sc]$ orthogonal to $c_2$, $c_3$,..., $c_P$ relative to the total energy in $c[sc]$ using

$$\frac{\bar{w}^h \bar{c}[sc]}{\sqrt{\bar{c}^h[sc]\bar{c}[sc]}}.$$

The above detection steps providing a relative power output is repeated at various assumed values of $\tau$ to detect what delays correspond to the relative power computation produces peaks across the spectrum of possible client device frequency offsets.

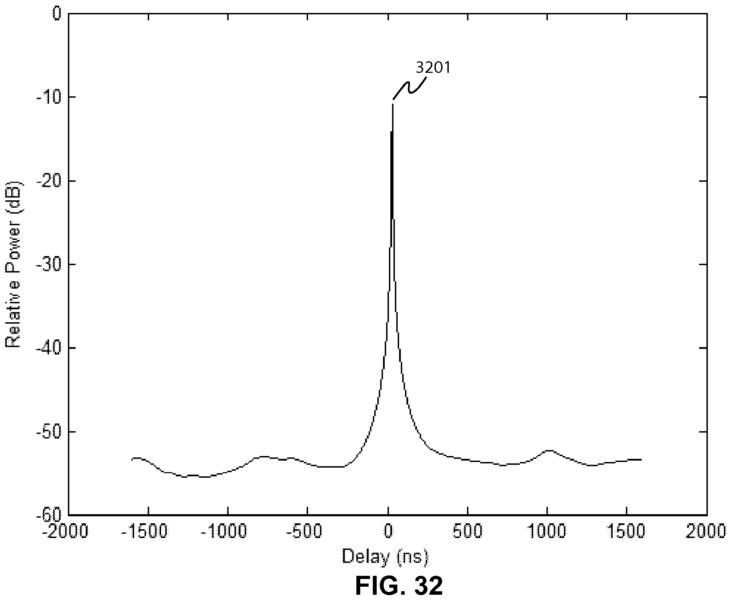

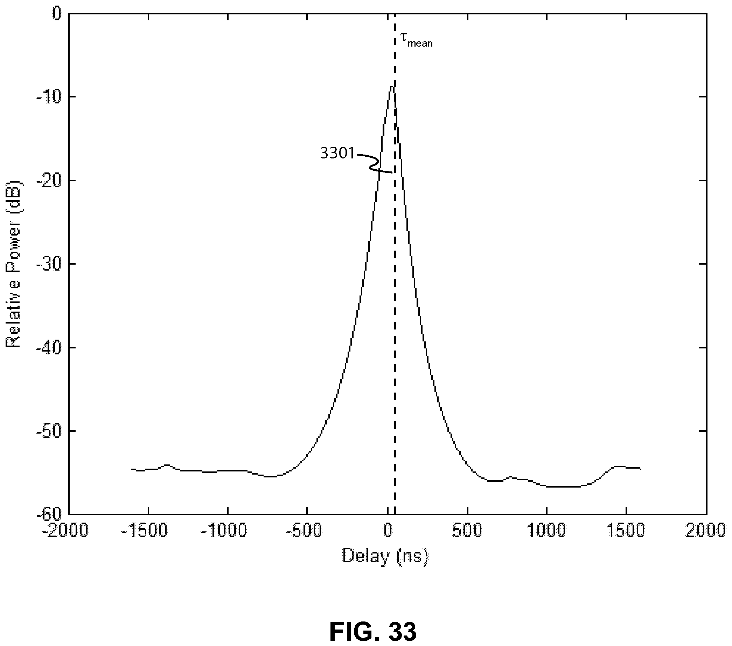

FIG. 32 illustrates the output of the above methods in resolving the time of arrival of signal components of an 802.11 OFDM packet in a predominantly line of sight channel. The plot in FIG. 32 shows the relative output power versus delay value. In this case, there is a distinct peak **3201** in the delay profile corresponding to the predominant path. FIG. 33 illustrates the output of the above methods in resolving the time of arrival of signal components in an 802.11 OFDM packet in a channel with significantly more delay spread. As seen in FIG. 33, the peak is not as distinct as in FIG. 32 because there are a range of multi-path components now. The invention still allows for an approximation of $\tau_{mean}$ **3301**

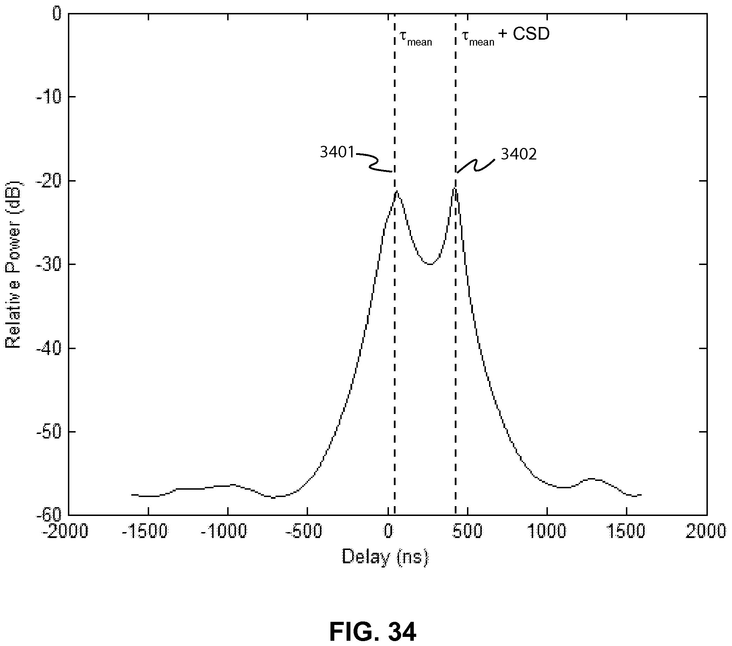

corresponding to approximate mean delay of the multi-path components. FIG. 34 illustrates the output of the above methods in resolving the time of arrival of multi-path components in an 802.11 OFDM packet in the same channel used in FIG. 33, but now with a two antenna WLAN client device. We now see two distinct peaks corresponding to the information transmitted from the two different antenna paths with one of the antennas having a CSD of 400 nS in this case. The invention determines the approximate delay associated with each signal from the two antennas as indicated by relative peak **3401** corresponding to $\tau_{mean}$ and relative peak **3402** corresponding to $\tau_{mean}$ + CSD.

The composite channel vector as a result of the signals from both client antennas **2904** and **2905** to the AP as illustrated in FIG. 29 at a particular subcarrier index may be written as

$$\bar{c}_{comp}[sc] = \bar{c}_{ANT1}[sc] + \bar{c}_{ANT2}[sc]$$

where $c_{comp}[sc]$ is the composite channel vector at a particular subcarrier index, $c_{ANT1}[sc]$ is the channel vector associated with one of the antennas at a particular subcarrier index, and $c_{ANT2}[sc]$ is the channel vector associated with the other antenna at a particular subcarrier index. Assuming the delay spread of the individual multi-paths are relatively small in comparison to the inverse of the subcarrier spacing, $c_{ANT1}[sc]$ can be approximated by

$$\bar{c}_{ANT1}[sc] \approx \bar{c}_{ANT1}[sc + 1]e^{-j\,2\pi\,\Delta f\,\tau_{mean}}.$$

Likewise, $c_{ANT2}[sc]$ can be approximated by

$$\bar{c}_{ANT2}[sc] \approx \bar{c}_{ANT2}[sc + 1]e^{-j\,2\pi\,\Delta f\,(\tau_{mean}+CSD)}.$$

Using the approximations for $c_{ANT1}[sc]$ and $c_{ANT2}[sc]$ and substituting into

$$\bar{c}_{comp}[sc] - \bar{c}_{comp}[sc + 1]e^{+j\,2\pi\,\Delta f\,\tau_{mean}}$$

produces

$$\bar{c}_{ANT2}\left(1 - e^{-j\,2\pi\,\Delta f\,CSD}\right).$$

Solving for $c_{ANT2}$ gives

$$\bar{c}_{ANT2} = \frac{\bar{c}_{comp}[sc]-\bar{c}_{comp}[sc+1]e^{+j\,2\pi\,\Delta f\,\tau_{mean}}}{1-e^{-j\,2\pi\,\Delta f\,CSD}}.$$

Similarly, using the approximations for $c_{ANT1}[sc]$ and $c_{ANT2}[sc]$ and substituting into

$$\bar{c}_{comp}[sc] - \bar{c}_{comp}[sc + 1]e^{+j\,2\pi\,\Delta f\,(\tau_{mean}+CSD)}$$

produces

$$\bar{c}_{ANT1}\left(1 - e^{+j\,2\pi\,\Delta f\,CSD}\right).$$

Solving for $c_{ANT1}$ gives

$$\bar{c}_{ANT1} = \frac{\bar{c}_{comp}[sc]-\bar{c}_{comp}[sc+1]e^{+j\,2\pi\,\Delta f\,(\tau_{mean}+CSD)}}{1-e^{+j\,2\pi\,\Delta f\,CSD}}.$$

Therefore, with knowledge of the composite channel using the methods described previously for resolving signals in the presence of interference along with the additional ability to determine the delay of signals associated with the various antenna elements, embodiments of the present invention have the ability to determine the individual channel vectors associated with each antenna of a multi-antenna device.

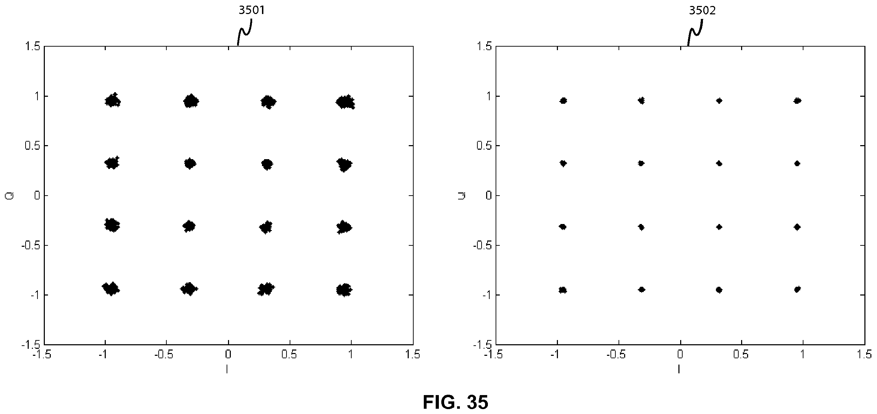

FIG. 35 shows the results of a test in which the methods described previously for DL MU-MIMO are used in a scenario such as FIG. 29. Both clients are at approximately the same distance from the AP and **3501** shows the received constellation for Client 1A **2902** and **3502** shows the received constellation for Client 1B **2903**. Notice that in comparison to FIG. 30 in which no attempt was made to resolve the channel vectors of the individual antenna elements, FIG. 35 illustrates that both the constellation of the single antenna device **3501** and the constellation of the client with 2 antennas **3502** show low error indicating a much higher signal to interference ratio in comparison to previous results.

The embodiments of the present invention may be embodied as methods, apparatus, electronic devices, and/or computer program products. Accordingly, the embodiments of the present invention may be embodied in hardware and/or in software (including firmware, resident software, micro-code, and the like), which may be generally referred to herein as a "circuit" or "module". Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device. These computer program instructions may also be stored in a computer-usable or computer-readable memory that may direct a computer or other programmable data processing apparatus to function in a particular manner, such that the instructions stored in the computer usable or computer-readable memory produce an article of manufacture including instructions that implement the function specified in the flowchart and/or block diagram block or blocks.

The computer-usable or computer-readable medium may be, for example but not limited to, an electronic, magnetic, optical, electromagnetic, infrared, or semiconductor system, apparatus or device. More specific examples (a non-exhaustive list) of the computer-readable medium include the following: hard disks, optical storage devices, magnetic storage devices, an electrical connection having one or more wires, a portable computer diskette, a random access memory (RAM), a read-only memory (ROM), an erasable programmable read-only memory (EPROM or Flash memory), an optical fiber, and a compact disc read-only memory (CD-ROM).

Computer program code for carrying out operations of the present invention may be written in an object oriented programming language, such as Java.RTM, Smalltalk or C++, and the like. However, the computer program code for carrying out operations of the present invention may also be written in conventional procedural programming languages, such as the "C" programming language and/or any other lower level assembler languages. It will be further appreciated that the functionality of any or all of the program modules may also be implemented using discrete hardware components, one or more Application Specific Integrated Circuits (ASICs), or programmed Digital Signal Processors or microcontrollers.

The foregoing description, for purpose of explanation, has been described with reference to specific embodiments. However, the illustrative discussions above are not intended to be exhaustive or to limit embodiments of the present invention to the precise forms disclosed. Many modifications and variations are possible in view of the above teachings. The embodiments were chosen and described in order to best explain the principles of the present disclosure and its practical applications, to thereby enable others skilled in the art to best utilize embodiments of the present invention and various embodiments with various modifications as may be suited to the particular use contemplated.

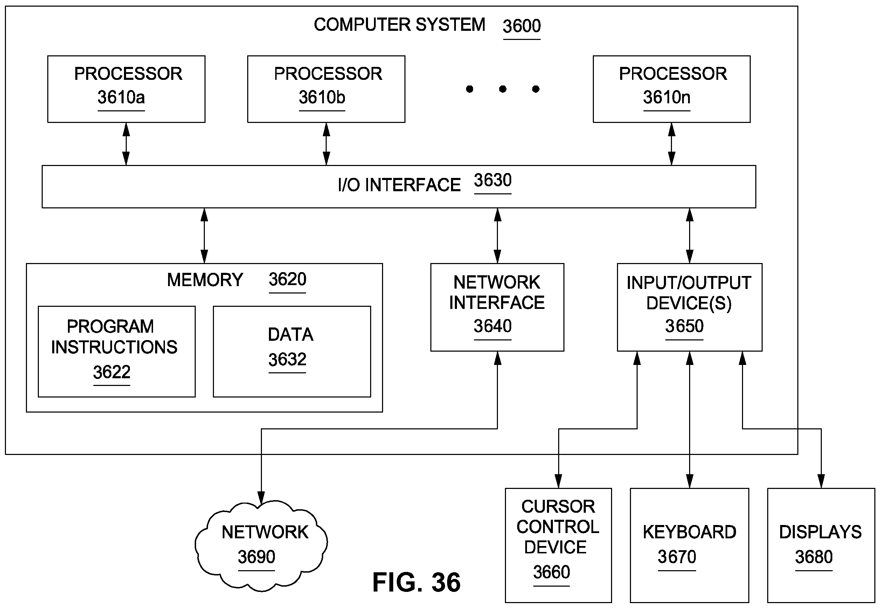

Figure 36 depicts a computer system 3600 that can be utilized in various embodiments of the present invention to implement the computer and/or the display, according to one or more embodiments.

Various embodiments of method and apparatus for organizing, displaying and accessing contacts in a contact list, as described herein, may be executed on one or more computer systems, which may interact with various other devices. One such computer system is computer system 3600 illustrated by Figure 36, which may in various embodiments implement any of the elements or functionality illustrated in the Figures included herein. In various embodiments, computer system 3600 may be configured to implement methods described above. The computer system 3600 may be used to implement any other system, device, element, functionality or method of the above-described embodiments. In the illustrated embodiments, computer system 3600 may be configured to implement the methods described herein as processor-executable executable program instructions 3622 (e.g., program instructions executable by processor(s) 3610) in various embodiments.

In the illustrated embodiment, computer system 3600 includes one or more processors 3610a-3610n coupled to a system memory 3620 via an input/output (I/O) interface 3630. Computer system 3600 further includes a network interface 3640 coupled to I/O interface 3630, and one or more input/output devices 3650, such as cursor control device 3660, keyboard 3670, and display(s) 3680. In various embodiments, any of the components may be utilized by the system to receive user input described above. In various embodiments, a user interface may be generated and displayed on display 3680. In some cases, it is contemplated that embodiments may be implemented using a single instance of

**EP 3 207 646 B1**

computer system 3600, while in other embodiments multiple such systems, or multiple nodes making up computer system 3600, may be configured to host different portions or instances of various embodiments. For example, in one embodiment some elements may be implemented via one or more nodes of computer system 3600 that are distinct from those nodes implementing other elements. In another example, multiple nodes may implement computer system 3600 in a distributed manner.

In different embodiments, computer system 3600 may be any of various types of devices, including, but not limited to, a personal computer system, desktop computer, laptop, notebook, or netbook computer, mainframe computer system, handheld computer, workstation, network computer, a camera, a set top box, a mobile device, a consumer device, video game console, handheld video game device, application server, storage device, a peripheral device such as a switch, modem, router, or in general any type of computing or electronic device.

In various embodiments, computer system 3600 may be a uniprocessor system including one processor 3610, or a multiprocessor system including several processors 3610 (e.g., two, four, eight, or another suitable number). Processors 3610 may be any suitable processor capable of executing instructions. For example, in various embodiments processors 3610 may be general-purpose or embedded processors implementing any of a variety of instruction set architectures (ISAs). In multiprocessor systems, each of processors 3610 may commonly, but not necessarily, implement the same ISA.

System memory 3620 may be configured to store program instructions 3622 and/or data 3632 accessible by processor 3610. In various embodiments, system memory 3620 may be implemented using any suitable memory technology, such as static random access memory (SRAM), synchronous dynamic RAM (SDRAM), nonvolatile/Flash-type memory, or any other type of memory. In the illustrated embodiment, program instructions and data implementing any of the elements of the embodiments described above may be stored within system memory 3620. In other embodiments, program instructions and/or data may be received, sent or stored upon different types of computer-accessible media or on similar media separate from system memory 3620 or computer system 3600.

In one embodiment, I/O interface 3630 may be configured to coordinate I/O traffic between processor 3610, system memory 3620, and any peripheral devices in the device, including network interface 3640 or other peripheral interfaces, such as input/output devices 3650. In some embodiments, I/O interface 3630 may perform any necessary protocol, timing or other data transformations to convert data signals from one component (e.g., system memory 3620) into a format suitable for use by another component (e.g., processor 3610). In some embodiments, I/O interface 3630 may include support for devices attached through various types of peripheral buses, such as a variant of the Peripheral Component Interconnect (PCI) bus standard or the Universal Serial Bus (USB) standard, for example. In some embodiments, the function of I/O interface 3630 may be split into two or more separate components, such as a north bridge and a south bridge, for example. Also, in some embodiments some or all of the functionality of I/O interface 3630, such as an interface to system memory 3620, may be incorporated directly into processor 3610.

Network interface 3640 may be configured to allow data to be exchanged between computer system 3600 and other devices attached to a network (e.g., network 3690), such as one or more external systems or between nodes of computer system 3600. In various embodiments, network 3690 may include one or more networks including but not limited to Local Area Networks (LANs) (e.g., an Ethernet or corporate network), Wide Area Networks (WANs) (e.g., the Internet), wireless data networks, some other electronic data network, or some combination thereof. In various embodiments, network interface 3640 may support communication via wired or wireless general data networks, such as any suitable type of Ethernet network, for example; via telecommunications/telephony networks such as analog voice networks or digital fiber communications networks; via storage area networks such as Fiber Channel SANs, or via any other suitable type of network and/or protocol.

Input/output devices 3650 may, in some embodiments, include one or more display terminals, keyboards, keypads, touchpads, scanning devices, voice or optical recognition devices, or any other devices suitable for entering or accessing data by one or more computer systems 3600. Multiple input/output devices 3650 may be present in computer system 3600 or may be distributed on various nodes of computer system 3600. In some embodiments, similar input/output devices may be separate from computer system 3600 and may interact with one or more nodes of computer system 3600 through a wired or wireless connection, such as over network interface 3640.

In some embodiments, the illustrated computer system may implement any of the operations and methods described above. In other embodiments, different elements and data may be included.

Those skilled in the art will appreciate that computer system 3600 is merely illustrative and is not intended to limit the scope of embodiments. In particular, the computer system and devices may include any combination of hardware or software that can perform the indicated functions of various embodiments, including computers, network devices, Internet appliances, PDAs, wireless phones, pagers, and the like. Computer system 3600 may also be connected to other devices that are not illustrated, or instead may operate as a stand-alone system. In addition, the functionality provided by the illustrated components may in some embodiments be combined in fewer components or distributed in additional components. Similarly, in some embodiments, the functionality of some of the illustrated components may not be provided and/or other additional functionality may be available.

19

Those skilled in the art will also appreciate that, while various items are illustrated as being stored in memory or on storage while being used, these items or portions of them may be transferred between memory and other storage devices for purposes of memory management and data integrity. Alternatively, in other embodiments some or all of the software components may execute in memory on another device and communicate with the illustrated computer system via inter-computer communication. Some or all of the system components or data structures may also be stored (e.g., as instructions or structured data) on a computer-accessible medium or a portable article to be read by an appropriate drive, various examples of which are described above. In some embodiments, instructions stored on a computer-accessible medium separate from computer system 3600 may be transmitted to computer system 3600 via transmission media or signals such as electrical, electromagnetic, or digital signals, conveyed via a communication medium such as a network and/or a wireless link. Various embodiments may further include receiving, sending or storing instructions and/or data implemented in accordance with the foregoing description upon a computer-accessible medium or via a communication medium. In general, a computer-accessible medium may include a storage medium or memory medium such as magnetic or optical media, e.g., disk or DVD/CD-ROM, volatile or non-volatile media such as RAM (e.g., SDRAM, DDR, RDRAM, SRAM, and the like), ROM, and the like.

The methods described herein may be implemented in software, hardware, or a combination thereof, in different embodiments. In addition, the order of methods may be changed, and various elements may be added, reordered, combined, omitted or otherwise modified. All examples described herein are presented in a non-limiting manner. Various modifications and changes may be made as would be obvious to a person skilled in the art having benefit of this disclosure. Realizations in accordance with embodiments have been described in the context of particular embodiments. These embodiments are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of the appended claims. Finally, structures and functionality presented as discrete components in the example configurations may be implemented as a combined structure or component. These and other variations, modifications, additions, and improvements may fall within the scope of embodiments as defined in the appended claims.

While the foregoing is directed to embodiments of the present invention, other and further embodiments of the invention may be devised without departing from the basic scope thereof, and the scope thereof is determined by the appended claims.

## Claims

1. A computer-implemented method for simultaneous communication with multiple wireless communication devices, the method comprising:

   receiving, using a plurality of antennas (102, 202) at a first wireless station, a plurality of packets, comprising a plurality of orthogonal frequency division multiplexing, OFDM, symbols, transmitted simultaneously from a plurality of other wireless stations wherein each of the simultaneously transmitted symbols includes a plurality of subcarriers;
   from each antenna of the plurality of antennas, taking a number of continuous samples from within each OFDM symbol to form a sample set,
   for each antenna (102, 202) of the plurality of antennas, frequency domain transforming the sample sets from that antenna (102, 202) to produce frequency domain outputs for each subcarrier;
   for each subcarrier, grouping the frequency domain transform outputs into a subcarrier vector specific to that subcarrier;
   determining a difference between subcarrier vectors formed over different sample sets, and based on the difference, determining a weighting vector for each subcarrier, wherein the weighting vector is selected so as to isolate each received packet from interference sources, and performing a multiplication of the vector specific to that subcarrier and the selected weighting vector so as to enable the first wireless station to at least one of detect or demodulate the received plurality of packets that were simultaneously transmitted by the plurality of other wireless stations.

2. The computer-implemented method of claim 1, wherein the plurality of packets substantially conform to an OFDM variant of an IEEE 802.11 standard, and wherein each packet includes a preamble having a long symbol having a duration exceeding a duration of subsequent OFDM symbols.

3. The computer-implemented method of claim 2, wherein the OFDM wireless signals simultaneously received do not require any frequency or timing alignment beyond what is specified by the IEEE 802.11 standard.

4. The computer-implemented method of claim 3, wherein the first wireless station is an access point.

5. The computer-implemented method of claim 3, wherein the first wireless station is a collection of distributed elements capable of receiving radio frequency signals and transferring signal information to a central unit for processing.

6. The computer-implemented method of claim 5, wherein subsets of distributed elements are used for transmitting to individual wireless stations permitting simultaneous uplink multi-user multiple input multiple output, UL MU-MIMO.

7. The computer-implemented method of claim 3, wherein the method involves excluding the subcarriers used by Short Training Fields, STFs, included in the packets.

8. The computer-implemented method of claim 3, further comprising:
demodulating the received plurality of simultaneously transmitted packets, wherein demodulating the packets involves using the weights to resolve one or more packets from other interfering sources.

9. The computer-implemented method of claim 3, wherein individual packets can be resolved without information regarding phase or amplitude changes caused by a wireless medium used for transmission of the wireless signals.

10. The computer-implemented method of claim 3, wherein a source of interference includes transmissions from the first wireless station, and wherein the first wireless station transmits to one or more of the plurality of other wireless stations while simultaneously receiving from one or more additional wireless stations.

11. The computer-implemented method of claim 3, wherein information gained on receiving is used to simultaneously transmit to a plurality of wireless stations, optionally wherein multiple stations are synchronized permitting a plurality of transmissions originating from multiple stations to happen simultaneously.

12. A system arranged to perform the method of any of claims 1 to 11.

13. A computer program product or computer-readable storage medium carrying computer-readable program code that, when executed by an instruction execution system, apparatus, or device, cause the method of any of claims 1 to 11 to be carried out.

**Patentansprüche**

1. Computerimplementiertes Verfahren zur gleichzeitigen Kommunikation mit mehreren drahtlosen Kommunikationsgeräten, wobei das Verfahren aufweist:

Empfangen, unter Verwendung einer Vielzahl von Antennen (102, 202) an einer ersten drahtlosen Station, einer Vielzahl von Paketen, die eine Vielzahl von orthogonalen Frequenzmultiplexverfahren-, OFDM, -Symbolen aufweisen, die gleichzeitig von einer Vielzahl anderer drahtloser Stationen gesendet werden, wobei jedes der gleichzeitig gesendeten Symbole eine Vielzahl von Unterträgem aufweist;
von jeder Antenne der Vielzahl von Antennen, Nehmen einer Anzahl kontinuierlicher Abtastungen aus jedem OFDM-Symbol, um einen Abtastsatz zu bilden;
für jede Antenne (102, 202) der Vielzahl von Antennen, Unterziehen der Abtastsätze von dieser Antenne (102, 202) einer Frequenzdomänentransformation, um Frequenzdomänenausgänge für jeden Unterträger zu erzeugen;
für jeden Unterträger, Gruppieren der Frequenzdomänentransformations-Ausgänge in einen für diesen Unterträger spezifischen Unterträgervektor;
Bestimmen einer Differenz zwischen den über verschiedene Abtastsätze gebildeten Unterträgervektoren, und auf der Grundlage der Differenz Bestimmen eines Gewichtungsvektors für jeden Unterträger, wobei der Gewichtungsvektor ausgewählt wird, um jedes empfangene Paket von Störquellen zu isolieren, und Durchführen einer Multiplikation des für diesen Unterträger spezifischen Vektors und des ausgewählten Gewichtungsvektors, um zu ermöglichen, dass die erste drahtlose Station wenigstens eines durchführt von Ermitteln oder Demodulieren der empfangenen Vielzahl von Paketen, die gleichzeitig von der Vielzahl anderer drahtloser Stationen gesendet wurden.

**2.** Computerimplementiertes Verfahren nach Anspruch 1, wobei die Vielzahl von Paketen im Wesentlichen mit einer OFDM-Variante eines IEEE 802.11 Standards übereinstimmen, und wobei jedes Paket eine Präambel aufweist, die ein Langsymbol hat, welches eine Dauer hat, die eine Dauer nachfolgender OFDM-Symbole überschreitet.

**3.** Computerimplementiertes Verfahren nach Anspruch 2, wobei die gleichzeitig empfangenen drahtlosen OFDM-Signale keine Frequenz- oder Zeitanpassung über die Spezifizierung im IEEE 802.11 Standard hinaus benötigen.

**4.** Computerimplementiertes Verfahren nach Anspruch 3, wobei die erste drahtlose Station ein Zugangspunkt ist.

**5.** Computerimplementiertes Verfahren nach Anspruch 3, wobei die erste drahtlose Station eine Sammlung verteilter Elemente ist, die dazu in der Lage sind, Funkfrequenzsignale zu empfangen und Signalinformationen zur Verarbeitung an eine Zentraleinheit zu übertragen.

**6.** Computerimplementiertes Verfahren nach Anspruch 5, wobei Teilmengen verteilter Elemente zum Senden an einzelne drahtlose Stationen verwendet werden, wodurch gleichzeitiges Uplink Multiple-User Multiple Input Multiple Output, UL MU-MIMO, ermöglicht wird.

**7.** Computerimplementiertes Verfahren nach Anspruch 3, wobei das Verfahren das Ausschließen der Unterträger aufweist, die von Short Training Fields, STFs, verwendet werden, die in den Paketen enthalten sind.

**8.** Computerimplementiertes Verfahren nach Anspruch 3, das des Weiteren aufweist:
Demodulieren der empfangenen Vielzahl gleichzeitig gesendeter Pakete, wobei das Demodulieren der Pakete das Verwenden der Gewichte aufweist, um ein oder mehrere Pakete von anderen Störquellen aufzulösen.

**9.** Computerimplementiertes Verfahren nach Anspruch 3, wobei einzelne Pakete ohne Informationen hinsichtlich Phasen- oder Amplitudenänderungen aufgelöst werden können, die von einem drahtlosen Medium verursacht werden, das zum Senden der drahtlosen Signale verwendet wird.

**10.** Computerimplementiertes Verfahren nach Anspruch 3, wobei eine Störquelle Übertragungen von der ersten drahtlosen Station aufweist, und wobei die erste drahtlose Station an eine oder mehrere der Vielzahl anderer drahtloser Stationen überträgt, während sie gleichzeitig von einer oder mehreren zusätzlichen drahtlosen Stationen empfängt.

**11.** Computerimplementiertes Verfahren nach Anspruch 3, wobei Informationen, die beim Empfangen erhalten werden, verwendet werden, um gleichzeitig an eine Vielzahl drahtloser Stationen zu senden, wobei optional mehrere Stationen synchronisiert werden, wodurch ermöglicht wird, dass eine Vielzahl von Übertragungen, die von mehreren Station stammen, gleichzeitig stattfinden.

**12.** System, das dazu ausgelegt ist, das Verfahren nach einem der Ansprüche 1 bis 11 durchzuführen.

**13.** Computerprogrammerzeugnis oder computerlesbares Speichermedium, das computerlesbaren Programmcode enthält, der, wenn er von einem / einer Befehlsausführungssystem, -vorrichtung oder -gerät ausgeführt wird, veranlasst, dass das Verfahren nach einem der Ansprüche 1 bis 11 durchgeführt wird.

**Revendications**

**1.** Procédé mis en œuvre par ordinateur pour une communication simultanée avec de multiples dispositifs de communication sans fil, le procédé comprenant :

la réception, en utilisant une pluralité d'antennes (102, 202) se trouvant au niveau d'une première station sans fil, d'une pluralité de paquets, comprenant une pluralité de symboles de multiplexage par répartition orthogonale de la fréquence - OFDM - transmis simultanément à partir d'une pluralité d'autres stations sans fil, où chacun des symboles transmis simultanément comporte une pluralité de sous-porteuses ;

à partir de chaque antenne de la pluralité d'antennes, le prélèvement d'un certain nombre d'échantillons continus provenant de l'intérieur de chaque symbole de multiplexage OFDM, afin de former un ensemble d'échantillons,
pour chaque antenne (102, 202) de la pluralité d'antennes, le domaine fréquentiel transformant les ensembles d'échantillons provenant de cette antenne (102, 202), afin de produire des sorties du domaine fréquentiel pour chaque sous-porteuse ;

pour chaque sous-porteuse, le regroupement des sorties de transformation du domaine fréquentiel, en un vecteur de sous-porteuse spécifique à cette sous-porteuse ;

la détermination d'une différence entre des vecteurs de sous-porteuses formés sur différents ensembles d'échantillons et, en se basant sur la différence, la détermination d'un vecteur de pondération pour chaque sous-porteuse, où le vecteur de pondération est sélectionné de façon à isoler chaque paquet reçu en provenance de sources d'interférence, et la réalisation d'une multiplication du vecteur spécifique à cette sous-porteuse et du vecteur de pondération sélectionné, de façon à permettre à la première station sans fil au moins de détecter ou de démoduler la pluralité de paquets reçus qui ont été simultanément transmis par la pluralité d'autres stations sans fil.

2. Procédé mis en œuvre par ordinateur selon la revendication 1, dans lequel la pluralité de paquets est pratiquement conforme à une variante de multiplexage OFDM d'une norme IEEE 802.11, et dans lequel chaque paquet comprend un préambule ayant un symbole long ayant une durée dépassant une durée de symboles de multiplexage OFDM suivants.

3. Procédé mis en œuvre par ordinateur selon la revendication 2, dans lequel les signaux sans fil de multiplexage OFDM, simultanément reçus, ne demandent aucun alignement de fréquence ou de synchronisation au-delà de ce qui est spécifié par la norme IEEE 802.11.

4. Procédé mis en œuvre par ordinateur selon la revendication 3, dans lequel la première station sans fil est un point d'accès.

5. Procédé mis en œuvre par ordinateur selon la revendication 3, dans lequel la première station sans fil est une collection d'éléments distribués capables de recevoir des signaux de radiofréquence et de transférer à une unité centrale, pour traitement, des informations provenant des signaux.

6. Procédé mis en œuvre par ordinateur selon la revendication 5, dans lequel des sous-ensembles d'éléments distribués sont utilisés pour une transmission à des stations individuelles sans fil permettant des entrées multiples et des sorties multiples - simultanées - à utilisateurs multiples en liaison montante - UL MU-MIMO.

7. Procédé mis en œuvre par ordinateur selon la revendication 3, où le procédé implique l'exclusion des sous-porteuses utilisées par des champs de formation courts - STF - inclus dans les paquets.

8. Procédé mis en œuvre par ordinateur selon la revendication 3, comprenant en outre :
la démodulation de la pluralité reçue de paquets transmis simultanément, où la démodulation des paquets implique l'utilisation des poids pour décomposer un ou plusieurs paquets provenant d'autres sources d'interférence.

9. Procédé mis en œuvre par ordinateur selon la revendication 3, dans lequel des paquets individuels peuvent être décomposés sans information concernant des changements de phase ou d'amplitude provoqués par un support sans fil utilisé pour une transmission des signaux sans fil.

10. Procédé mis en œuvre par ordinateur selon la revendication 3, dans lequel une source d'interférence comprend des transmissions à partir de la première station sans fil, et dans lequel la première station sans fil transmet à une ou plusieurs stations de la pluralité des autres stations sans fil, tout en recevant simultanément depuis une ou plusieurs stations sans fil supplémentaires.

11. Procédé mis en œuvre par ordinateur selon la revendication 3, dans lequel des informations obtenues lors de la réception sont utilisées pour transmettre simultanément à une pluralité de stations sans fil, éventuellement procédé dans lequel de multiples stations sont synchronisées, permettant à une pluralité de transmissions provenant de multiples stations de se produire simultanément.

12. Système agencé pour exécuter le procédé selon l'une quelconque des revendications 1 à 11.

13. Produit de programme informatique ou support de stockage lisible par ordinateur, ledit produit ou support portant un code de programme lisible par ordinateur, code de programme qui, quand il est exécuté par un système d'exécution d'instructions, un appareil ou un dispositif, amène le procédé selon l'une quelconque des revendications 1 à 11 à être mis à exécution.

FIG. 1

**FIG. 2**

EP 3 207 646 B1

Ethernet PHY 311

313

Host Processor 310

Medium Access Controller 309

308

317

OFDM Demod 307

316

Matrix Multiply 306

315

Frequency Domain Transform 305

314

Frequency Offset Correction 304

Packet Detection, Frequency Offset Estimation, and Weighting Vector Computation 303

Signal Packaging / Unpackaging 302

Ethernet PHY 301

312

FIG. 3

Region of interest within 802.11 signal for packet detection and frequency offset determination.

Illustration of where overlapping sample sets are taken from 802.11 (L-)LTF as part of detection algorithm.

Corresponding implementation and expected output under ideal conditions.

(L-)LTF — 406
(L-)LTF
(L-)LTF — 406
... 406

410 — $(N-1)\Delta t$
$\Delta t$ — 409
Sample Set
Sample Set
Sample Set — 407
Sample Set — 407
407

405 — Filtering 401 → Frequency Offset Correction 402 → Frequency Domain Transform 403 → Time Shift Compensation 404 → $c\,S_{sc}$ — 408
405 — Filtering 401 → Frequency Offset Correction 402 → Frequency Domain Transform 403 → Time Shift Compensation 404 → $c\,S_{sc}$ — 408
405 — Filtering 401 → Frequency Offset Correction 402 → Frequency Domain Transform 403 → Time Shift Compensation 404 → $c\,S_{sc}$ — 408

411

**FIG. 4**

**FIG. 5**

EP 3 207 646 B1

**FIG. 6**

**FIG. 7**

**FIG. 8**

EP 3 207 646 B1

FIG. 9

**FIG. 10**

*Illustration of where sample sets are taken from intended OFDM signal.*

1101

| | SYM 1 | SYM 2 | ••• | SYM M | |
|---|---|---|---|---|---|

Sample Set  Sample Set  Sample Set

1102  1102  1102

Subcarrier Vector Computation 1103  Subcarrier Vector Computation 1103  Subcarrier Vector Computation 1103

1104  1104  1104

$\bar{y}[1]$  $\bar{y}[2]$  $\bar{y}[M]$  •••

*Method of computing covariance matrix from collection of samples sets.*

Outer Product 1106  Outer Product 1106  Outer Product 1106

+ 1107  ••• + 1107

$\frac{1}{M}$ 1108  $\hat{R}$ 1109

**FIG. 11**

35

**FIG. 12**

1301

| SYM 1 | SYM 2 | ••• | SYM M |

*Illustration of where sample sets are taken from intended OFDM signal.*

Sample Set | Sample Set | | Sample Set

*Method of computing covariance matrix from collection of samples sets.*

| Subcarrier Vector Computation 1303 | Subcarrier Vector Computation 1303 | | Subcarrier Vector Computation 1303 |

1302

1305

| $1 / S[1]$ | $\ominus$ | $1 / S[2]$ | $\ominus$ | ••• | $\ominus$ | $1 / S[M]$ |

1304

| Outer Product 1306 | Outer Product 1306 | Outer Product 1306 |

$\oplus$ 1307 ••• $\oplus$ 1307

$$\frac{1}{2\,(M-1)}$$

1308

$\hat{R}_{INT}$ 1309

**FIG. 13**

intended source
active

interference source 1
active

interference source 2
active

time

| interval 1401 | interval 1402 | interval 1403 |

Covariance Matrix
Computations
1404

Covariance Matrix
Computations
1404

$\hat{\bar{R}}_{INT}$

1405

$\hat{\bar{R}}$

1406

$\hat{\bar{R}}_{INT}$

1407

$\hat{\hat{\bar{R}}}$

1408

$\hat{\hat{\bar{R}}}_{INT}$

1409

FIG. 14

EP 3 207 646 B1

**FIG. 15**

EP 3 207 646 B1

**FIG. 16**

EP 3 207 646 B1

FIG. 17

**FIG. 18**

EP 3 207 646 B1

MCS 4 PER versus SIR (SNR = 35 dB)

FIG. 19

FIG. 20

RF Node 2103

2111

RF Node 2105

Client 1B 2109

RF Node 2107

2110

RF Node 2102

RF Node 2104

RF Node 2106

Client 1A 2108

RF Node 2101

**FIG. 21**

EP 3 207 646 B1

Client 1A | RTS 2201 | UL DATA 2203 | UL DATA 2205

RF Node Group 1A | CTS 2202 | ACK 2204 | ACK 2206

Client 1B | RTS 2207 | UL DATA 2209 | UL DATA 2211

RF Node Group 1B | CTS 2208 | ACK 2210 | ACK 2212

time

**FIG. 22**

FIG. 23

FIG. 24

AP 1
2501

Client 1A
2502

Client 1B
2503

# FIG. 25

AP 1 - Client 1A | RTS 2601 | DL MU-MIMO DATA 2605 | DL MU-MIMO DATA 2609

Client 1A - AP 1 | CTS 2602 | ACK 2607 | ACK 2611

AP 1 - Client 1B | RTS 2603 | DL MU-MIMO DATA 2606 | DL MU-MIMO DATA 2610

Client 1B - AP 1 | CTS 2604 | ACK 2608 | ACK 2612

time →

**FIG. 26**

AP 1
2701

Client 1A
2703

Client 1B
2704

Client 2A
2705

AP 2
2702

**FIG. 27**

AP 1 - Client 1A

| RTS 2801 |

DL MU-MIMO DATA 2807

DL MU-MIMO DATA 2813

Client 1A - AP 1

| CTS 2802 |

| ACK 2810 |

| ACK 2816 |

AP 1 - Client 1B

| RTS 2803 |

DL MU-MIMO DATA 2808

DL MU-MIMO DATA 2814

Client 1B - AP 1

| CTS 2804 |

| ACK 2811 |

| ACK 2817 |

AP 2 - Client 2A

| RTS 2805 |

DL MU-MIMO DATA 2809

DL MU-MIMO DATA 2815

Client 2A - AP 2

| CTS 2806 |

| ACK 2812 |

| ACK 2818 |

time →

**FIG. 28**

Client 1A
2902

AP 1
2901

2904

Client 1B
2903

2905

# FIG. 29

**FIG. 30**

**FIG. 31**

EP 3 207 646 B1

**FIG. 32**

**FIG. 33**

**FIG. 34**

EP 3 207 646 B1

FIG. 35

COMPUTER SYSTEM 3600

PROCESSOR 3610a

PROCESSOR 3610b

• • •

PROCESSOR 3610n

I/O INTERFACE 3630

MEMORY 3620

PROGRAM INSTRUCTIONS 3622

DATA 3632

NETWORK INTERFACE 3640

INPUT/OUTPUT DEVICE(S) 3650

NETWORK 3690

CURSOR CONTROL DEVICE 3660

KEYBOARD 3670

DISPLAYS 3680

FIG. 36

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006072524 A1
- US 20050047384 A1